# EUROPEAN PATENT SPECIFICATION

(11) **EP 4 195 045 B1**
(45) Date of publication and mention of the grant of the patent: **07.10.2026**
(21) Application number: 20949126.5
(22) Date of filing: 14.08.2020
(51) Int. Cl.: G06F 9/50, G06N 5/04, G06F 15/163, G06N 3/063

(54) **DATA INTERACTION METHOD BETWEEN MAIN CPU AND NPU, AND COMPUTING DEVICE**
DATENINTERAKTIONSVERFAHREN ZWISCHEN HAUPT-CPU UND NPU UND DATENVERARBEITUNGSVORRICHTUNG
PROCÉDÉ D'INTERACTION DE DONNÉES ENTRE CPU PRINCIPALE ET NPU, ET DISPOSITIF INFORMATIQUE

(43) Date of publication of application: 14.06.2023
(73) Proprietor: Yinwang Intelligent Technologies Co., Ltd., Shenzhen, Guangdong 518110 (CN)
(72) Inventor: ZHU, Xiangyi, Shenzhen, Guangdong 518129 (CN)
(74) Representative: Maiwald GmbH
(86) International application number: PCT/CN2020/109133
(87) International publication number: WO 2022/032628

(56) References cited:
- CN-A- 107 729 159
- CN-A- 110 851 285
- CN-A- 110 929 856
- CN-A- 111 104 459
- US-A1- 2010 122 264
- US-A1- 2014 095 829
- US-A1- 2018 308 201
- US-A1- 2019 258 533

## Description

### TECHNICAL FIELD

This application relates to the field of artificial intelligence (artificial intelligence, AI) technologies, and in particular, to a method for data exchange between a host CPU and an NPU and a computing device.

### BACKGROUND

With wide application of AI, deep learning has become a mainstream manner of current AI research and application. For parallel computing of massive data, AI imposes an increasing requirement on computing power, and therefore imposes higher requirements on a computing speed and power consumption of hardware. In addition to a general-purpose central processing unit (central processing unit, CPU), some chip processors used for hardware acceleration such as a graphics processing unit (graphics processing unit, GPU), a neural network processing unit (neural networks process unit, NPU), and a field-programmable gate array (field programmable gate array, FPGA) also play their own strengths in different applications of deep learning The NPU is especially skilled at processing massive multimedia data such as video and image data. In actual application, the NPU needs to perform collaborative processing with the CPU to complete a specific task. To be specific, the NPU serves as a coprocessor mounted to a host CPU (Host CPU), the host CPU allocates a task (that is, sends a task-related command), and then the NPU executes the corresponding task and returns an execution processing result to the host CPU.

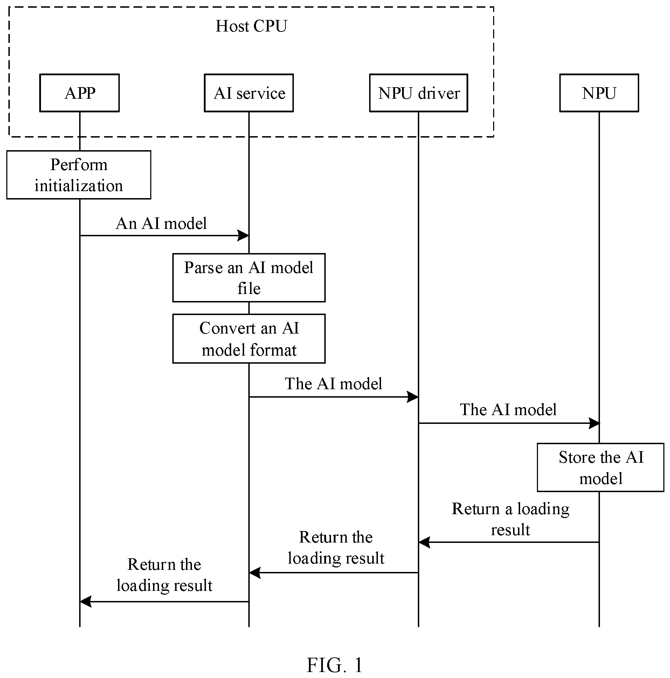

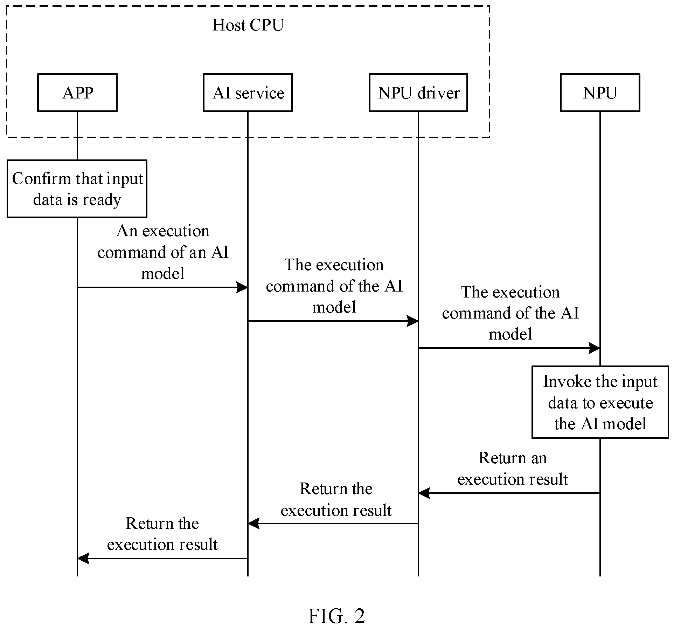

Currently, a data exchange procedure between a host CPU and an NPU is as follows: An AI model is first loaded to the NPU; as shown in FIG. 1, an application (application, APP) on the host CPU is first initialized; a service interface of an AI service (AI Service) on the host CPU is called; an AI model file that can be identified by the AI service is sent to the AI service; the AI service parses the AI model and converts a parsed AI model file into a format that can be processed by the NPU; then, the AI service calls a user-mode interface of an NPU driver (NPU driver) on the host CPU; the NPU driver is further switched to a kernel mode, configures a related register and interface of the NPU, and loads the AI model to the NPU; the NPU stores the AI model, and returns a loading success result to the APP sequentially through the NPU driver and the AI service; after the AI model is successfully loaded and input data is ready (for example, a camera completes output of one frame of image), a command (namely, an AI model execution command) is delivered by using the APP, to call the service interface of the AI service and the NPU driver to perform AI model inference; and after executing the related inference task, the NPU also needs to return an obtained execution result to the APP sequentially through the NPU driver and the AI service, as shown in FIG. 2.

It can be learned from the data exchange procedure between the host CPU and the NPU that the AI model inference command delivered by the host CPU by using the APP can reach the NPU only after passing through the AI service and the NPU driver (namely, a command path). Likewise, the execution result of the AI model can be returned to the APP only after passing through the NPU driver and AI service (namely, a response path). In this case, the command path and the response path are time-consuming. This is mainly caused by the following factors: (1) The APP and AI service perform inter-process message communication. (2) The NPU driver is switched between a user mode and a kernel mode. (3) The host CPU on which the NPU driver is located and the NPU are two systems, and perform inter-system communication. In some actual application scenarios (for example, automated driving has a quite high requirement on real-time quality), time overheads of the command path and the response path of such AI model inference are quite high.

US 2018/308201 A1 describes a mechanism for optimizing computing of a graphics processor

In an exemplary architecture a plurality of GPUs are communicatively coupled to a plurality of multi-core processors over high-speed links (e.g., buses, point-to-point interconnects, etc.). A multi-core-processor and a graphics acceleration module are interconnected. The graphics acceleration module may include one or more GPU chips integrated on a line card which is coupled to the processor via the high-speed link.

A general-purpose graphics processing unit GPGPU is described, which can be configured to be particularly efficient in processing the type of computational workloads associated with training deep neural networks.

US 2018/308201 A1 describes in one embodiment, that process elements are stored in response to GPU invocations from applications executed on the processor. A process element contains the process state for the corresponding application. A work descriptor (WD) contained in the process element can be a single job requested by an application or may contain a pointer to a queue of jobs.

Furthermore, US 2018/308201 A1 describes registers, which are located in a processor and on the other hand registers which are located in INT, separate from graphics acceleration.

CN 111104459 A describes an AI apparatus which communicates with a processor through a high-speed interconnect network.

### SUMMARY

The invention is set out in the appended set of claims.

Embodiments of the present invention provide a method for data exchange between a host CPU and an NPU and a computing device, to reduce time overheads of a computing path between an APP on a host CPU and an NPU during AI inference, thereby improving AI model execution efficiency.

A first aspect of this application provides a computing device. The computing device includes a host CPU and an NPU, a target application (APP) runs on the host CPU, the host CPU includes an AI service (AI Service) and an NPU driver, the NPU includes an NPU controller, an arithmetic logic unit, and N registers, and N≥1. The host CPU is configured to load an AI model corresponding to the target APP to the NPU by using the AI service and the NPU driver, so that the NPU stores the AI model. The NPU is configured to: allocate one register (which may be referred to as a first register) to the AI model by using the NPU controller, where the register is one of the N registers on the NPU. Because each register has a corresponding physical address, if the NPU allocates one register to the AI model by using the NPU controller, a physical address of the register can be obtained. The NPU is further configured to send the physical address of the register to the host CPU. The host CPU is further configured to: receive the physical address of the register sent by the NPU, and map the physical address of the register to a virtual address of a virtual memory (which may be referred to as a first virtual memory) on the target APP. In this way, the one register is correspondingly allocated to the AI model loaded to the NPU, and the physical address of the register is mapped to the virtual address of the virtual memory on the target APP. With the virtual address that is on the target APP and that is corresponding to the register, the host CPU may be configured to write the virtual memory based on the virtual address by using the target APP. The NPU is further configured to: when the host CPU writes the first virtual memory based on the first virtual address by using the target APP, control, by using the NPU controller, the arithmetic logic unit to execute the AI model. The NPU is further configured to write an execution result of the AI model into the first register by using the NPU controller. The host CPU is further configured to: perform polling on the first virtual memory based on the first virtual address by using the target APP, and read the execution result of the AI model from the first register.

In the foregoing implementation of this application, the computing device including the host CPU and the NPU is described. The at least one register is disposed on the NPU. After the host CPU loads the AI model to the NPU, the NPU allocates one register to the AI model. In addition, after receiving the physical address of the register sent by the NPU, the host CPU further maps the physical address of the register to the virtual address of the virtual memory on the target APP. Actually, the host CPU may directly read/write, by using the target APP, the register that is on the NPU and that is corresponding to the AI model. This means that a direct connection path exists between the target APP and the NPU. In this way, in an entire procedure in which the host CPU delivers an AI model execution command to the NPU by using the target APP (that is, directly writes the virtual memory to trigger the NPU to execute the AI model), and obtains the execution result of the AI model (that is, reads the virtual memory to obtain the execution result of the AI model), a computing path bypasses the AI service and the NPU driver, and there are only read/write overheads of the register, which can be totally ignored compared with time overheads in an existing solution. In an AI model inference process in this embodiment of this application, there are only read/write overheads of the register. This greatly improves AI model inference efficiency, and also improves real-time quality of the AI model inference.

In a possible implementation of the first aspect, because each register has a corresponding physical address (physical address, PA), the host CPU may specifically be configured to: receive, by using the NPU driver, the physical address sent by the NPU controller, and map the physical address to virtual memory space of the AI service by using the NPU driver, to obtain a second virtual address of a second virtual memory on the AI service; and map the second virtual address to virtual memory space of the APP by using the AI service, to obtain the first virtual address of the first virtual memory on the APP.

In the foregoing implementation of this application, another function of the NPU is specifically described, that is, how the physical address of the one register allocated to the AI model is mapped to the virtual address of the virtual memory on the target APP is described. The foregoing implementation is implementable.

In a possible implementation of the first aspect, the host CPU is further specifically configured to: receive, by using the APP, a memory handle that is of the second virtual address and that is sent by the AI service; and map the memory handle of the second virtual address to the first virtual address of the first virtual memory on the APP by using the APP.

In the foregoing implementation of this application, a specific implementation in which the virtual address of the virtual memory on the AI service is mapped to the virtual address of the virtual memory on the target APP is provided. The foregoing implementation is optional and flexible.

In a possible implementation of the first aspect, the host CPU is specifically configured to: receive, by using the NPU driver, the physical address of the first register sent by the NPU controller; and map the physical address of the first register directly to virtual memory space of the APP by using the NPU driver, to obtain the first virtual address of the first virtual memory on the APP.

In the foregoing implementation of this application, another function of the NPU is specifically described, that is, how the physical address of the one register allocated to the AI model is mapped to the virtual address of the virtual memory on the target APP is described. The foregoing implementation is flexible.

In a possible implementation of the first aspect, the NPU is specifically configured to send the physical address of the first register to the NPU driver of the host CPU.

In the foregoing implementation of this application, the NPU sends the physical address of the register to the NPU driver of the host CPU for the reason that the physical address first needs to be mapped to the virtual memory space of the AI service by using the NPU driver. This satisfies an actual application requirement.

A second aspect of this application further provides a computing device. The computing device includes a host CPU and an NPU, a target application (APP) runs on the host CPU, the host CPU includes an AI service (AI Service) and an NPU driver, the NPU includes an NPU controller, an arithmetic logic unit, and N registers, and N≥2. The host CPU is configured to load an AI model corresponding to the target APP to the NPU by using the AI service and the NPU driver. The NPU is configured to: allocate a first register and a second register to the AI model by using the NPU controller, and send a first physical address of the first register and a second physical address of the second register to the host CPU by using the NPU controller, where the first register and the second register belong to the N registers. The host CPU is further configured to: receive the first physical address and the second physical address that are sent by the NPU, and map the first physical address and the second physical address respectively to a first virtual address of a first virtual memory on the APP and a second virtual address of a second virtual memory on the APP. The host CPU is further configured to write the first virtual memory based on the first virtual address by using the target APP.

The NPU is further configured to: when the host CPU writes the first virtual memory based on the first virtual address by using the target APP, control, by using the NPU controller, the arithmetic logic unit to execute the AI model. The NPU is further configured to write an execution result of the AI model into the second register by using the NPU controller. The host CPU is further configured to: perform polling on the second virtual memory based on the second virtual address by using the target APP, and read the execution result of the AI model from the second register.

In the foregoing implementation of this application, the computing device including the host CPU and the NPU is described. The at least two registers are disposed on the NPU. After the host CPU loads the AI model to the NPU, the NPU allocates two registers, namely, the first register and the second register, to the AI model. In addition, the physical addresses of the two registers are mapped to the virtual addresses of the two virtual memories on the target APP. Actually, the target APP may directly read one register and write the other register. This means that two direct connection paths exist between the target APP and the NPU. In this way, in an entire procedure in which the host CPU delivers an AI model execution command to the NPU by using the target APP (that is, directly writes the first virtual memory to trigger the NPU to execute the AI model), and obtains the execution result of the AI model (that is, reads the second virtual memory to obtain the execution result of the AI model), computing paths bypass the AI service and the NPU driver, and there are only read/write overheads of the registers, which can be totally ignored compared with overheads in an existing solution. This improves real-time quality of AI model inference. In addition, different computing paths use different registers. The process is easy to operate, and it is not prone to confuse the information. In a possible implementation of the second aspect, the host CPU is specifically configured to: receive, by using the NPU driver, the first physical address and the second physical address that are sent by the NPU controller, and separately map the first physical address and the second physical address to virtual memory space of the AI service by using the NPU driver, to obtain a third virtual address of a third virtual memory on the AI service and a fourth virtual address of a fourth virtual memory on the AI service; and separately map the third virtual address and the fourth virtual address to virtual memory space of the APP by using the AI service, to obtain the first virtual address of the first virtual memory on the APP and the second virtual address of the second virtual memory on the APP.

In the foregoing implementation of this application, another function of the NPU is specifically described, that is, how the physical addresses of the two registers allocated to the AI model are mapped respectively to the virtual addresses of the two virtual memories on the target APP is described. The foregoing implementation is implementable.

In a possible implementation of the second aspect, the host CPU is further specifically configured to: receive a memory handle of the third virtual address and a memory handle of the fourth virtual address by using the APP, where the memory handles are sent by the AI service; and map, by using the APP, the memory handle of the third virtual address and the memory handle of the fourth virtual address respectively to the first virtual address of the first virtual memory on the APP and the second virtual address of the second virtual memory on the APP.

In the foregoing implementation of this application, a specific implementation in which the virtual addresses of the two virtual memories on the AI service are mapped to the virtual addresses of the two virtual memories on the target APP is provided. The foregoing implementation is optional and flexible.

In a possible implementation of the second aspect, the host CPU is specifically configured to: receive, by using the NPU driver, the first physical address and the second physical address that are sent by the NPU controller; and separately map the first physical address and the second physical address directly to virtual memory space of the APP by using the NPU driver, to obtain the first virtual address of the first virtual memory on the APP and the second virtual address of the second virtual memory on the APP.

In the foregoing implementation of this application, another function of the NPU is specifically described, that is, how the physical addresses of the two registers allocated to the AI model are mapped to the virtual addresses of the two virtual memories on the target APP is described. The foregoing implementation is flexible.

In a possible implementation of the second aspect, that the NPU is specifically configured to send the physical addresses of the two registers to the host CPU specifically means sending the physical addresses of the two registers to the NPU driver of the host CPU.

In the foregoing implementation of this application, the NPU sends the physical addresses of the two registers to the NPU driver of the host CPU for the reason that the physical addresses of the two registers first need to be mapped to the virtual memory space of the AI service by using the NPU driver. This satisfies an actual application requirement. A third aspect of this application further provides a computing device. The computing device includes a host CPU and an NPU, a target application (APP) runs on the host CPU, the host CPU includes an AI service (AI Service) and an NPU driver, and the NPU includes an NPU controller and an arithmetic logic unit. The host CPU is configured to load an AI model corresponding to the target APP to the NPU by using the AI service and the NPU driver. The host CPU is further configured to: allocate a first memory to the AI model by using the NPU driver, and map an address of the first memory to a first virtual address of a first virtual memory on the target APP. In this way, the one memory on the NPU driver is correspondingly allocated to the AI model loaded to the NPU, and the address of the memory is further mapped to the virtual address of the virtual memory on the target APP. With the virtual address that is on the target APP and that is corresponding to the memory on the NPU driver, the host CPU may be configured to write the virtual memory based on the virtual address by using the target APP. This essentially means writing the corresponding memory on the NPU driver, and then data in the memory on the NPU driver is modified (that is, the host CPU writes the virtual memory by using the target APP). The host CPU is further configured to: when the host CPU writes the first virtual memory based on the first virtual address by using the target APP, send an execution command to the NPU controller by using the NPU driver. The NPU is configured to: control, according to the execution command by using the NPU controller, the arithmetic logic unit to execute the AI model, and send an execution result of the AI model to the NPU driver by using the NPU controller. The host CPU is further configured to write the execution result of the AI model into the first memory by using the NPU driver. The host CPU is further configured to: perform polling on the first virtual memory based on the first virtual address by using the target APP, and read the execution result of the AI model from the first memory.

In the foregoing implementation of this application, the computing device including the host CPU and the NPU is specifically described. At least one memory is allocated on the NPU driver of the host CPU. After the AI model is loaded to the NPU, the NPU driver allocates one memory located on the NPU driver to the AI model, and maps the address of the memory to the virtual address of the virtual memory on the target APP. The host CPU may directly read/write the memory by using the target APP. This means that a direct connection path exists between the target APP and the NPU driver. In comparison with an existing solution, in an AI model inference process in this implementation, inter-process time overheads caused between the target APP and the AI service and time overheads caused when the NPU driver is switched from a user mode to a kernel mode are reduced. Compared with the method in any one of the first aspect or the possible implementations of the first aspect of this application, time overheads caused between the NPU driver and the NPU controller are not reduced, but an advantage of this implementation lies in that a structure of the NPU does not need to be modified. In other words, AI model execution efficiency can be improved without modifying a chip structure.

A fourth aspect of this application provides a computing device. The computing device includes a host CPU and an NPU, a target application (APP) runs on the host CPU, the host CPU includes an AI service (AI Service) and an NPU driver, the NPU includes an NPU controller and an arithmetic logic unit. The host CPU is configured to load an AI model corresponding to the target APP to the NPU by using the AI service and the NPU driver. The host CPU is further configured to: allocate a first memory and a second memory to the AI model by using the NPU driver, and map an address of the first memory and an address of the second memory respectively to a first virtual address of a first virtual memory on the target APP and a second virtual address of a second virtual memory on the target APP, where the first memory and the second memory are memories allocated on the NPU driver. In this way, the two memories on the NPU driver are correspondingly allocated to the AI model loaded to the NPU, and the addresses of the two memories are further mapped to the virtual addresses of the two virtual memories on the target APP. With the virtual addresses that are on the target APP and that are corresponding to the memories on the NPU driver, the host CPU may be configured to write the first virtual memory based on one of the virtual addresses (for example, the virtual address of the first virtual memory) by using the target APP. This essentially means writing the corresponding first memory on the NPU driver, and then data in the first memory on the NPU driver is modified (that is, the host CPU writes the first virtual memory by using the target APP). The host CPU is further configured to: when the host CPU writes the first virtual memory based on the first virtual address by using the target APP, send an execution command to the NPU controller by using the NPU driver. The NPU is configured to: control, according to the execution command by using the NPU controller, the arithmetic logic unit to execute the AI model, and send an execution result of the AI model to the NPU driver by using the NPU controller. The host CPU is further configured to write the execution result of the AI model into the second memory by using the NPU driver. The host CPU is further configured to: perform polling on the second virtual memory based on the second virtual address by using the target APP, and read the execution result of the AI model from the second memory.

In the foregoing implementation of this application, the computing device including the host CPU and the NPU is specifically described. At least two memories are allocated on the NPU driver of the host CPU. After the AI model is loaded to the NPU, the NPU driver allocates two memories located on the NPU driver, namely, the first memory and the second memory, to the AI model, and maps the addresses of the two memories respectively to the virtual addresses of the two virtual memories on the target APP. The host CPU may directly read one memory and write the other memory by using the target APP. This means that two direct connection paths exist between the target APP and the NPU driver. In comparison with an existing solution, in an AI model inference process in this implementation, inter-process time overheads caused between the target APP and the AI service and time overheads caused when the NPU driver is switched from a user mode to a kernel mode are reduced. Compared with the method in any one of the third aspect or the possible implementations of the third aspect of this application, time overheads caused between the NPU driver and the NPU controller are not reduced, but an advantage of this implementation lies in that a structure of the NPU does not need to be modified. In other words, AI model execution efficiency can be improved without modifying a chip structure. In addition, different computing paths use different registers. The process is easy to operate, and it is not prone to confuse the information.

A fifth aspect of this application provides a computing device. The computing device includes a host CPU and an NPU. The host CPU includes an AI service (AI Service) and an NPU driver. The NPU includes an NPU controller, an arithmetic logic unit, and at least one register, and a first register in the at least one register is configured to store an execution result of a first AI model loaded to the NPU. The AI service and the NPU driver perform a communication connection with each other. The NPU driver and the NPU controller perform a communication connection with each other.

The foregoing implementation of this application provides a computing device. The at least one register is additionally added to the NPU included in the computing device. When an AI model is loaded to the NPU, one or two registers may be allocated to the first AI model. In this way, in a subsequent AI inference, a target APP may directly read/write the virtual memory to access the register, and bypass the AI service and the NPU driver, thereby reducing time overheads of a computing path.

In a possible implementation of the fifth aspect, the at least one register is disposed on the NPU controller.

In the foregoing implementation of this application, the additional added register may be disposed on the NPU controller. The foregoing implementation is implementable.

A sixth aspect of this application provides a method for data exchange between a host CPU and an NPU. The method is applied to a computing device, the computing device includes a host CPU and an NPU, a target APP runs on the host CPU, the host CPU includes an AI service and an NPU driver, the NPU includes an NPU controller, an arithmetic logic unit, and N registers, and N≥1. The method may specifically include: The host CPU first loads an AI model corresponding to the target APP to the NPU by using the AI service and the NPU driver, so that the NPU stores the AI model. Then, the host CPU receives a physical address of a register (which may be referred to as a first register) sent by the NPU, and maps the physical address of the register to a virtual address of a virtual memory (which may be referred to as a first virtual memory) on the target APP. The register is a register allocated to the AI model by using the NPU controller, after the NPU obtains the loaded AI model. The register is one of the N registers on the NPU. Because each register has a corresponding physical address, if the NPU allocates one register to the AI model by using the NPU controller, a physical address of the register is obtained. In this way, the one register is correspondingly allocated to the AI model loaded to the NPU, and the physical address of the register is mapped to the virtual address of the virtual memory on the target APP. With the virtual address that is on the target APP and that is corresponding to the register, the host CPU may write the virtual memory based on the virtual address by using the target APP. Writing the virtual memory by using the target APP essentially means writing the corresponding register, and then data in the register on the NPU is modified (that is, the host CPU writes the virtual memory by using the target APP). When input data is ready, modification performed on the register directly triggers the NPU to control, by using the NPU controller, the arithmetic logic unit to execute the corresponding AI model, and an execution result of the AI model is written into the register by the NPU controller. Because the host CPU accesses the memory through addressing, that the host CPU reads data of the virtual memory in a polling mode based on the virtual address by using the target APP essentially means reading the corresponding data of the register in a polling mode. After a previous round ends and before a current round starts, if the execution result of the AI model is written into the register, the execution result of the AI model can be read in the current round of polling.

In the foregoing implementation of this application, after the host CPU loads the AI model to the NPU, the NPU allocates one register to the AI model. In addition, after receiving the physical address of the register sent by the NPU, the host CPU further maps the physical address of the register to the virtual address of the virtual memory on the target APP. Actually, the host CPU may directly read/write, by using the target APP, the register that is on the NPU and that is corresponding to the AI model. This means that a direct connection path exists between the target APP and the NPU. In this way, in an entire procedure in which the host CPU delivers an AI model execution command to the NPU by using the target APP (that is, directly writes the virtual memory to trigger the NPU to execute the AI model), and obtains the execution result of the AI model (that is, reads the virtual memory to obtain the execution result of the AI model), a computing path bypasses the AI service and the NPU driver, and there are only read/write overheads of the register, which can be totally ignored compared with time overheads in an existing solution. In an AI model inference process in this embodiment of this application, there are only read/write overheads of the register. This greatly improves AI model inference efficiency, and also improves real-time quality of the AI model inference.

In a possible implementation of the sixth aspect, because each register has a corresponding physical address (physical address, PA), that the host CPU maps the physical address of the register to the virtual address of the virtual memory on the target APP may be implemented in, but not limited to, the following manner: The host CPU first receives, by using the NPU driver, the physical address (assuming that the physical address is PA 0) of the register sent by the NPU controller, and further maps the physical address PA 0 to virtual memory space of the AI service by using the NPU driver, to obtain a virtual address (assuming that the virtual address is VA 0') of a virtual memory (which may be referred to as a second virtual memory) on the AI service. The target APP and the AI service belong to different processes, data exchange between the APP and the AI service belongs to inter-process data exchange, and virtual memories of different processes cannot access each other, but the target APP and the AI service need to share the same register. Therefore, the host CPU further maps the virtual address VA 0' to virtual memory space of the target APP by using the AI service, to obtain the virtual address (assuming that the virtual address is VA 0) that is of the virtual memory on the target APP and that is corresponding to the virtual address VA 0'.

In the foregoing implementation of this application, a function of the NPU is specifically described, that is, how the physical address of the one register allocated to the AI model is mapped to the virtual address of the virtual memory on the target APP is described. The foregoing implementation is implementable.

In a possible implementation of the sixth aspect, that the host CPU maps the virtual address VA 0' to virtual memory space of the target APP by using the AI service, to obtain the virtual address VA 0 of the virtual memory on the target APP may specifically be implemented in, but not limited to, the following manners: (1) The host CPU receives, by using the target APP, a memory handle (assuming that the memory handle is FD 0) that is of the virtual address VA 0' and that is sent by the AI service, and maps the memory handle FD 0 to the virtual address VA 0 of the virtual memory on the target APP by using the target APP. In effect, VA 0 is the virtual address that is on the target APP and that is of the corresponding register on the NPU. (2) The host CPU receives, by using the target APP, the virtual address VA 0' sent by the AI service, and then directly maps the virtual address VA 0' to the virtual address VA 0 of the virtual memory on the target APP by using the target APP.

In the foregoing implementation of this application, several specific implementations in which the virtual address of the virtual memory on the AI service is mapped to the virtual address of the virtual memory on the target APP are provided. The foregoing implementation is optional and flexible.

In a possible implementation of the sixth aspect, it is assumed that the target APP is integrated with a related function of the AI service, so that the target APP can directly interact with the NPU driver, that is, the target APP can interact with the NPU driver without a service interface provided by the AI service. In this case, after receiving, by using the NPU driver, the physical address PA 0 that is of the register allocated to the target APP and that is sent by the NPU, the host CPU may directly map the physical address PA 0 to virtual memory space of the target APP, to obtain the virtual address VA 0 of the virtual memory on the target APP. The virtual address VA 0' of the virtual memory on the AI service no longer needs to be obtained.

In the foregoing implementation of this application, another function of the NPU is specifically described, that is, how the physical address of the one register allocated to the AI model is mapped to the virtual address of the virtual memory on the target APP is described. The foregoing implementation is flexible.

In a possible implementation of the sixth aspect, that the NPU sends the physical address of the register to the host CPU specifically means sending the physical address of the register to the NPU driver of the host CPU.

In the foregoing implementation of this application, the NPU sends the physical address of the register to the NPU driver of the host CPU for the reason that the physical address first needs to be mapped to the virtual memory space of the AI service by using the NPU driver. This satisfies an actual application requirement.

A seventh aspect of this application provides a method for data exchange between a host CPU and an NPU. The method is applied to a computing device, the computing device includes a host CPU and an NPU, a target APP runs on the host CPU, the host CPU includes an AI service and an NPU driver, the NPU includes an NPU controller, an arithmetic logic unit, and N registers, and N≥2. The method may specifically include: The host CPU first loads an AI model corresponding to the target APP to the NPU by using the AI service and the NPU driver, so that the NPU stores the AI model. Then, the host CPU receives physical addresses of two registers (which may be referred to as a first register and a second register) sent by the NPU, and maps the physical address of the first register and the physical address of the second register respectively to a virtual address of a first virtual memory on the target APP and a virtual address of a second virtual memory on the target APP. The two registers are two registers allocated to the AI model by using the NPU controller, after the NPU obtains the loaded AI model. The two registers belong to the N registers on the NPU. Because each register has a corresponding physical address, if the NPU allocates two registers to the AI model by using the NPU controller, physical addresses of the two registers, namely, a first physical address and a second physical address, are obtained. In this way, the two registers are correspondingly allocated to the AI model loaded to the NPU, and the two physical addresses of the two registers are mapped respectively to the two virtual addresses of the two virtual memories on the target APP. With the two virtual addresses that are on the target APP and that are corresponding to the registers, the host CPU may write the first virtual memory based on one of the virtual addresses (for example, the virtual address of the first virtual memory) by using the target APP. Writing the first virtual memory by using the target APP essentially means writing the corresponding first register, and then data in the first register on the NPU is modified (that is, the host CPU writes the first virtual memory by using the target APP). When input data is ready, modification performed on the first register directly triggers the NPU to control, by using the NPU controller, the arithmetic logic unit to execute the corresponding AI model, and an execution result of the AI model is written into the second register by the NPU controller. Because the host CPU accesses the memories through addressing, that the host CPU reads data of the second virtual memory in a polling mode based on the second virtual address by using the target APP essentially means reading corresponding data of the second register in a polling mode. After a previous round ends and before a current round starts, if the execution result of the AI model is written into the second register, the execution result of the AI model can be read in the current round of polling.

In the foregoing implementation of this application, after the host CPU loads the AI model to the NPU, the NPU allocates two registers, namely, the first register and the second register, to the AI model. In addition, the physical addresses of the two registers are mapped to the virtual addresses of the two virtual memories on the target APP. Actually, the target APP may directly read one register and write the other register. This means that two direct connection paths exist between the target APP and the NPU. In this way, in an entire procedure in which the host CPU delivers an AI model execution command to the NPU by using the target APP (that is, directly writes the first virtual memory to trigger the NPU to execute the AI model), and obtains the execution result of the AI model (that is, reads the second virtual memory to obtain the execution result of the AI model), computing paths bypass the AI service and the NPU driver, and there are only read/write overheads of the registers, which can be totally ignored compared with overheads in an existing solution. This improves real-time quality of AI model inference. In addition, different computing paths use different registers. The process is easy to operate, and it is not prone to confuse the information. In a possible implementation of the seventh aspect, because each register has a corresponding physical address, that the host CPU maps the physical addresses of the two registers to the virtual addresses of the two virtual memories on the target APP may be implemented in, but not limited to, the following manner: The host CPU first receives, by using the NPU driver, the physical address of the first register and the physical address of the second register (assuming that the two physical addresses are PA 1 and PA 2) sent by the NPU controller, and further maps the physical address PA 1 and the physical address PA 2 to virtual memory space of the AI service by using the NPU driver, to obtain virtual addresses (assuming that the two virtual addresses are VA 1' and VA 2') of two virtual memories on the AI service. The target APP and the AI service belong to different processes, data exchange between the APP and the AI service belongs to inter-process data exchange, and virtual memories of different processes cannot access each other, but the target APP and the AI service need to share the two registers. Therefore, the host CPU further separately maps the virtual address VA 1' and the virtual address VA 2' to virtual memory space of the target APP by using the AI service, to obtain the virtual addresses (assuming that the two virtual addresses are VA 1 and VA 2) that are of the two virtual memories on the target APP and that are corresponding to the virtual address VA 1' and the virtual address VA 2'.

In the foregoing implementation of this application, a function of the NPU is specifically described, that is, how the physical addresses of the two registers allocated to the AI model are mapped respectively to the virtual addresses of the two virtual memories on the target APP is described. The foregoing implementation is implementable.

In a possible implementation of the seventh aspect, that the host CPU separately maps the virtual address VA 1' and the virtual address VA 2' to virtual memory space of the target APP by using the AI service, to obtain the virtual address VA 1 and the virtual address VA 2 of the two virtual memories on the target APP may specifically be implemented in, but not limited to, the following manners: (1) The host CPU receives, by using the target APP, a memory handle of the virtual address VA 1' and a memory handle of the virtual address VA 2' (assuming that the two memory handles are FD 1 and FD 2), where the memory handles are sent by the AI service; and maps the memory handle FD 1 and the memory handle FD 2 respectively to the virtual address VA 1 of the first virtual memory on the target APP and the virtual address VA 2 of the second virtual memory on the target APP by using the target APP. In effect, VA 1 is the virtual address that is on the target APP and that is of the corresponding first register on the NPU, and VA 2 is the virtual address that is on the target APP and that is of the corresponding second register on the NPU. (2) The host CPU receives, by using the target APP, the virtual address VA 1' and the virtual address VA 2' sent by the AI service, and then directly maps the virtual address VA 1' and the virtual address VA 2' respectively to the virtual address VA 1 of the first virtual memory on the target APP and the virtual address VA 2 of the second virtual memory on the target APP by using the target APP.

In the foregoing implementation of this application, several specific implementations in which the virtual addresses of the two virtual memories on the AI service are mapped to the virtual addresses of the two virtual memories on the target APP are provided. The foregoing implementation is optional and flexible.

In a possible implementation of the seventh aspect, it is assumed that the target APP is integrated with a related function of the AI service, so that the target APP can directly interact with the NPU driver, that is, the target APP can interact with the NPU driver without a service interface provided by the AI service. In this case, after receiving, by using the NPU driver, the physical addresses PA 1 and PA 2 that are of the two registers allocated to the target APP and that are sent by the NPU, the host CPU may separately map the physical addresses PA 1 and PA 2 directly to virtual memory space of the target APP, to obtain the virtual address VA 1 of the first virtual memory on the target APP and the virtual address VA 2 of the second virtual memory on the target APP. The virtual addresses VA 1' and VA 2' of the virtual memories on the AI service no longer need to be obtained.

In the foregoing implementation of this application, another function of the NPU is specifically described, that is, how the physical addresses of the two registers allocated to the AI model are mapped to the virtual addresses of the two virtual memories on the target APP is described. The foregoing implementation is flexible.

In a possible implementation of the seventh aspect, that the NPU sends the physical addresses of the two registers to the host CPU specifically means sending the physical addresses of the two registers to the NPU driver of the host CPU.

In the foregoing implementation of this application, the NPU sends the physical addresses of the two registers to the NPU driver of the host CPU for the reason that the physical addresses of the two registers first need to be mapped to the virtual memory space of the AI service by using the NPU driver. This satisfies an actual application requirement. An eighth aspect of this application provides a method for data exchange between a host CPU and an NPU. The method is applied to a computing device, the computing device includes a host CPU and an NPU, a target APP runs on the host CPU, the host CPU includes an AI service and an NPU driver, and the NPU includes an NPU controller and an arithmetic logic unit. The method may specifically include: The host CPU first loads an AI model corresponding to the target APP to the NPU by using the AI service and the NPU driver, so that the NPU stores the AI model. Then, the host CPU allocates a memory (the memory is a memory allocated on the NPU driver) to the AI model by using the NPU driver, and maps an address of the memory to a virtual address of a virtual memory on the target APP. In this way, the one memory on the NPU driver is correspondingly allocated to the AI model loaded to the NPU, and the address of the memory is further mapped to the virtual address of the virtual memory on the target APP. With the virtual address that is on the target APP and that is corresponding to the memory on the NPU driver, the host CPU may write the virtual memory based on the virtual address by using the target APP. This essentially means writing the corresponding memory on the NPU driver, and then data in the memory on the NPU driver is modified (that is, the host CPU writes the virtual memory by using the target APP). When input data is ready, the NPU driver is directly triggered to send an execution command to the NPU, where the execution command is used to indicate the NPU to control, by using the NPU controller, the arithmetic logic unit to execute the AI model, so that when the input data is ready, the NPU controls, by using the NPU controller, the arithmetic logic unit to execute the corresponding AI model, to obtain an execution result of the AI model, and sends the execution result to the host CPU. The host CPU receives, by using the NPU driver, the execution result sent by the NPU, and then stores the execution result in the memory by using the NPU driver. Finally, that the host CPU may read data of the virtual memory in a polling mode based on the virtual address by using the target APP essentially means reading the corresponding data of the memory on the NPU driver in a polling mode. After a previous round ends and before a current round starts, if the execution result of the AI model is written into the memory, the execution result of the AI model can be read in the current round of polling. In the foregoing implementation of this application, after the AI model is loaded to the NPU, the NPU driver allocates one memory located on the NPU driver to the AI model, and maps the address of the memory to the virtual address of the virtual memory on the target APP. The host CPU may directly read/write the memory by using the target APP. This means that a direct connection path exists between the target APP and the NPU driver. In comparison with an existing solution, in an AI model inference process in this implementation, inter-process time overheads caused between the target APP and the AI service and time overheads caused when the NPU driver is switched from a user mode to a kernel mode are reduced. Compared with the method in any one of the first aspect or the possible implementations of the first aspect of this application, time overheads caused between the NPU driver and the NPU controller are not reduced, but an advantage of this implementation lies in that a structure of the NPU does not need to be modified. In other words, AI model execution efficiency can be improved without modifying a chip structure. A ninth aspect of this application provides a method for data exchange between a host CPU and an NPU. The method is applied to a computing device, the computing device includes a host CPU and an NPU, a target APP runs on the host CPU, the host CPU includes an AI service and an NPU driver, and the NPU includes an NPU controller and an arithmetic logic unit. The method may specifically include: The host CPU first loads an AI model corresponding to the target APP to the NPU by using the AI service and the NPU driver, so that the NPU stores the AI model. Then, the host CPU allocates two memories (the two memories are memories allocated on the NPU driver) to the AI model by using the NPU driver, and maps addresses of the two memories respectively to a virtual address of a first virtual memory on the target APP and a virtual address of a second virtual memory on the target APP. In this way, the two memories on the NPU driver are correspondingly allocated to the AI model loaded to the NPU, and the addresses of the two memories are further mapped to the virtual addresses of the two virtual memories on the target APP. With the virtual addresses that are on the target APP and that are corresponding to the memories on the NPU driver, the host CPU may write the first virtual memory based on one of the virtual addresses (for example, the virtual address of the first virtual memory) by using the target APP. This essentially means writing a corresponding first memory on the NPU driver, and then data in the first memory on the NPU driver is modified (that is, the host CPU writes the first virtual memory by using the target APP). When input data is ready, the NPU driver is directly triggered to send an execution command to the NPU, where the execution command is used to indicate the NPU to control, by using the NPU controller, the arithmetic logic unit to execute the AI model, so that when the input data is ready, the NPU controls, by using the NPU controller, the arithmetic logic unit to execute the corresponding AI model, to obtain an execution result of the AI model, and sends the execution result to the host CPU. The host CPU receives, by using the NPU driver, the execution result sent by the NPU, and then writes the execution result into a second memory by using the NPU driver. Finally, that the host CPU may read data of the second virtual memory in a polling mode based on the other virtual address (namely, the virtual address of the second virtual memory) by using the target APP essentially means reading corresponding data of the second memory on the NPU driver in a polling mode. After a previous round ends and before a current round starts, if the execution result of the AI model is written into the second memory, the execution result of the AI model can be read in the current round of polling.

In the foregoing implementation of this application, after the AI model is loaded to the NPU, the NPU driver allocates two memories located on the NPU driver, namely, the first memory and the second memory, to the AI model, and maps the addresses of the two memories respectively to the virtual addresses of the two virtual memories on the target APP. The host CPU may directly read one memory and write the other memory by using the target APP. This means that two direct connection paths exist between the target APP and the NPU driver. In comparison with an existing solution, in an AI model inference process in this implementation, inter-process time overheads caused between the target APP and the AI service and time overheads caused when the NPU driver is switched from a user mode to a kernel mode are reduced. Compared with the method in any one of the third aspect or the possible implementations of the third aspect of this application, time overheads caused between the NPU driver and the NPU controller are not reduced, but an advantage of this implementation lies in that a structure of the NPU does not need to be modified. In other words, AI model execution efficiency can be improved without modifying a chip structure. In addition, different computing paths use different registers. The process is easy to operate, and it is not prone to confuse the information. A tenth aspect of the embodiments of this application further provides a computing device. The computing device may include a memory, a transceiver, a processor, and a bus system. The memory, the transceiver, and the processor are connected by using the bus system. The memory is configured to store a program and instructions. The transceiver is configured to receive or send information under the control of the processor. The processor is configured to invoke the instructions stored in the memory, to perform the method in any one of the sixth aspect to the ninth aspect or the implementable manners of the sixth aspect to the ninth aspect of the embodiments of this application.

An eleventh aspect of the embodiments of this application provides a chip. The chip includes a processor and an interface circuit, and the interface circuit is coupled to the processor. The processor is configured to run a computer program or instructions, to implement the method in any one of the sixth aspect to the ninth aspect or the implementable manners of the sixth aspect to the ninth aspect of the embodiments of this application. The interface circuit is configured to communicate with another module outside the chip.

A twelfth aspect of the embodiments of this application provides a computer-readable storage medium. The computer-readable storage medium stores instructions. When the instructions are run on a computer, the computer is enabled to perform the method in any one of the sixth aspect to the ninth aspect or the implementable manners of the sixth aspect to the ninth aspect of the embodiments of this application.

A thirteenth aspect of the embodiments of this application provides a computer program product including instructions. When the computer program product is run on a computer, the computer is enabled to perform the method in any one of the sixth aspect to the ninth aspect or the implementable manners of the sixth aspect to the ninth aspect of the embodiments of this application.

### BRIEF DESCRIPTION OF DRAWINGS

FIG. 1 is a schematic flowchart of loading an AI model by a host CPU to an NPU during data exchange between the host CPU and the NPU;
FIG. 2 is a schematic flowchart of executing an AI model during data exchange between a host CPU and an NPU;
FIG. 3 is a schematic diagram of a computing device according to an embodiment of this application;
FIG. 4 is a schematic diagram of a storage form of an AI model on an NPU according to an embodiment of this application;
FIG. 5 is a flowchart of a method for data exchange between a host CPU and an NPU according to an embodiment of this application;
FIG. 6 is a flowchart of mapping a physical address of a register to a virtual address of a virtual memory on a target APP according to an embodiment of this application;
FIG. 7 is a flowchart of an execution command process and an execution result response process of AI model inference according to an embodiment of this application;
FIG. 8 is a schematic diagram of mapping a physical address PA 0 of a register to a virtual address VA 0 of a virtual memory on an APP 1 by using an AI service according to an embodiment of this application;
FIG. 9 is another flowchart of a method for data exchange between a host CPU and an NPU according to an embodiment of this application;
FIG. 10 is a flowchart of mapping physical addresses of two registers corresponding to an AI model to virtual addresses of two virtual memories on a target APP according to an embodiment of this application;
FIG. 11 is another flowchart of an execution command process and an execution result response process of AI model inference according to an embodiment of this application;
FIG. 12 is a schematic diagram of mapping physical addresses PA 1 and PA 2 of two registers respectively to virtual addresses VA 1 and VA 2 of two virtual memories on an APP 1 by using an AI service according to an embodiment of this application;
FIG. 13 is another schematic diagram of a computing device according to an embodiment of this application;
FIG. 14 is another flowchart of a method for data exchange between a host CPU and an NPU according to an embodiment of this application;
FIG. 15 is a flowchart of mapping an address of a memory on an NPU driver to a virtual address of a virtual memory on a target APP according to an embodiment of this application;
FIG. 16 is another flowchart of an execution command process and an execution result response process of AI model inference according to an embodiment of this application;
FIG. 17 is a schematic diagram of mapping A 0 of a memory on an NPU driver to a virtual address VA 0 of a virtual memory on an APP 1 by using an AI service according to an embodiment of this application;
FIG. 18 is another flowchart of a method for data exchange between a host CPU and an NPU according to an embodiment of this application;
FIG. 19 is a flowchart of mapping addresses of two memories that are on an NPU driver and that are corresponding to an AI model to virtual addresses of two virtual memories on a target APP according to an embodiment of this application;
FIG. 20 is another flowchart of an execution command process and an execution result response process of AI model inference according to an embodiment of this application;
FIG. 21 is a schematic diagram of mapping addresses A 1 and A 2 of two memories on an NPU driver respectively to virtual addresses VA 1 and VA 2 of two virtual memories on an APP 1 by using an AI service according to an embodiment of this application;
FIG. 22 is a schematic diagram of an application scenario according to an embodiment of this application;
FIG. 23 is a schematic diagram of another application scenario according to an embodiment of this application; and
FIG. 24 is a schematic diagram of another application scenario according to an embodiment of this application.

### DESCRIPTION OF EMBODIMENTS

The following describes embodiments of this application with reference to the accompanying drawings. It is clear that the described embodiments are merely a part rather than all of the embodiments of this application. A person of ordinary skill in the art may learn that, with technology development and emergence of a new scenario, the technical solutions provided in the embodiments of this application are also applicable to a similar technical problem.

In the specification, claims, and accompanying drawings of this application, terms "first", "second", and the like are intended to distinguish between similar objects but do not necessarily indicate a specific order or sequence. It should be understood that the data used in such a way are interchangeable in appropriate circumstances, so that the embodiments described herein can be implemented in other orders than the content illustrated or described herein. Moreover, terms "include", "have", and any other variant thereof are intended to cover non-exclusive inclusion. For example, a process, a method, a system, a product, or a device that includes a series of steps or modules is not necessarily limited to those expressly listed steps or modules, but may include other steps or modules not expressly listed or inherent to the process, the method, the system, the product, or the device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into the modules in this application is logical division. In actual application, there may be another division manner. For example, a plurality of modules may be combined or integrated into another system, or some features may be ignored or not performed. In addition, the displayed or discussed mutual coupling or direct coupling or communication connection may be implemented through some ports, and the indirect coupling or communication connection between modules may be in an electrical form or another similar form. This is not limited in this application. In addition, modules or submodules described as separate components may be or may not be physically separated, or may be or may not be physical modules, or may be distributed on a plurality of circuit modules. Objectives of the solutions of this application may be achieved by selecting some or all of the modules based on actual demands.

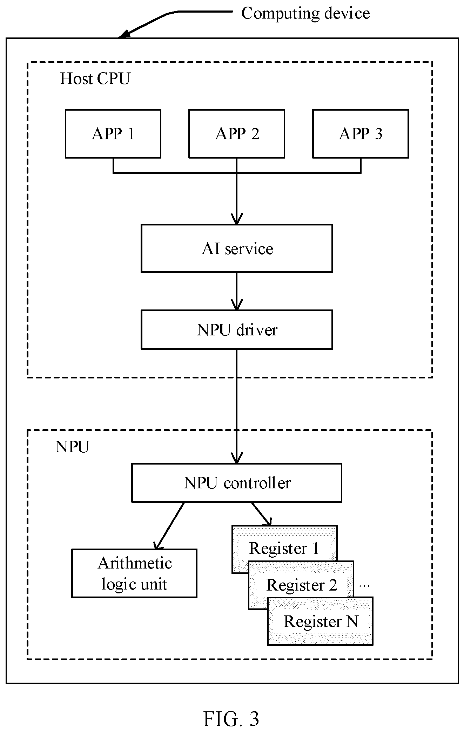

First, an embodiment of this application provides a new computing device. As shown in FIG. 3, the computing device includes a host CPU and an NPU, one or more APPs run on the host CPU (FIG. 3 shows three APPs: an APP 1, an APP 2, and an APP 3), the host CPU includes an AI service and an NPU driver, the NPU includes an NPU controller, an arithmetic logic unit, and N registers, and N≥1. The following separately describes functions of each module and the APP running on the host CPU.

An APP is an application running on the host CPU. One APP may be corresponding to one or more AI models. After the APP completes initialization, the host CPU may load an AI model corresponding to the APP (assuming that there are a plurality of AI models corresponding to the APP) to the NPU at a time, or may load, to the NPU, a specific AI model that needs to be used. This is not specifically limited herein. If a loaded AI model on the NPU has not been used for a long time (for example, exceeding a preset threshold), the APP may be used to indicate the NPU to delete the AI model.

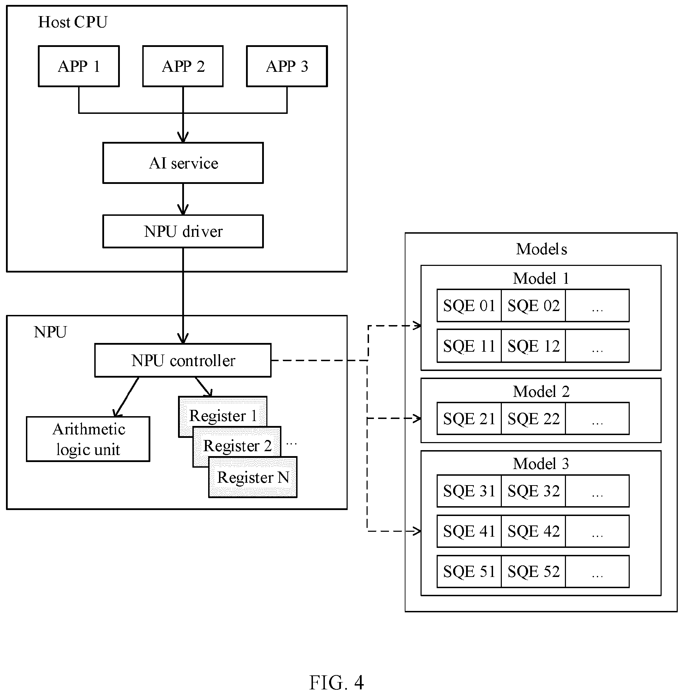

The AI service is configured to provide an AI model service interface for the APP, for example, an AI model loading interface. For details, refer to FIG. 1. Specifically, the AI service is further configured to implement an NPU-related software stack (the AI service externally provides only the AI model service interface to reduce complexity of the software stack). The APP only needs to use the interface provided by the AI service, and does not concern the NPU-related software stack. Therefore, details are not described herein. It should be noted herein that an AI model on the APP side is a calculation chart structure, the AI service is further configured to convert the calculation chart structure into an execution sequence structure of the NPU. One AI model is corresponding to one or more execution sequences, and each execution sequence has a plurality of execution elements (which may also be referred to as an execution task). To be specific, each SQE in FIG. 4 is one execution element. As shown in FIG. 4, it is assumed that a model 1 of an APP 1 (namely, an AI model corresponding to the APP 1) has two execution sequences, and a model 2 of an APP 2 (namely, an AI model corresponding to the APP 2) has one execution sequence, and a model 3 of an APP 3 (namely, an AI model corresponding to the APP 3) has three execution sequences. After each AI model is loaded, the AI models stored on the NPU are shown in FIG. 4. After the AI models are successfully loaded and input data is ready (for example, a camera completes output of one frame of image), an AI model execution command is sent to the NPU by using the APP, so that the NPU performs AI model inference. If execution elements in all execution sequences of the AI models are executed, the AI model inference is completed, and execution results of the AI models are obtained. The AI model is loaded once and inferred for a plurality of times. It should be noted herein that that input data is ready means that data used for performing AI model inference has been obtained. For example, for an intelligent vehicle, each frame of image shot by a camera is automatically stored in a storage module. Each time an image is stored, an execution command is delivered to the NPU by using the APP, to indicate the NPU to invoke the image from the storage module to perform AI model inference.

The NPU driver provides a driver for the NPU.

The NPU controller is configured to: receive the AI model sent by the host CPU, schedule the AI model to be executed based on the prepared input data, report an execution result of the AI model to the host CPU, and the like.

There may be one or more arithmetic logic units (FIG. 3 shows one arithmetic logic unit), configured to: receive the execution command delivered by the NPU controller, execute the AI model according to the execution command, return the execution result to the NPU controller, and the like.

The N registers are additionally added to the current NPU. A specific quantity of registers to be added may be set depending on a requirement. The N registers may serve as an independent module to be disposed inside the NPU, or may be disposed inside the NPU controller. Locations of the N registers on the NPU are not specifically limited (FIG. 3 shows that the N registers are independently disposed inside the NPU). For example, assuming that the NPU supports loading of a maximum of 1024 AI models, 1024 registers may be added to the NPU. When an AI model corresponding to a target APP is loaded to the NPU, the NPU controller allocates one register to the AI model, and a physical address of the register is finally mapped to virtual memory space of the target APP. Reading/Writing, by using the target APP, a virtual memory corresponding to a virtual address of a current process is reading/writing the register allocated on the NPU controller. The register is used by the target APP to deliver the AI model execution command, used by the NPU to return the execution result of the AI model, and the like. For another example, assuming that the NPU supports loading of a maximum of 1024 AI models, 1024×2 registers may be added to the NPU. When an AI model corresponding to a target APP is loaded to the NPU, the NPU controller allocates two registers to the AI model (similarly, physical addresses of the registers need to be mapped first). The registers are respectively used by the target APP to deliver the AI model execution command and used by the NPU to return the execution result of the AI model. Regardless of a quantity of registers allocated to an AI model, it is equivalent to implement direct communication between the target APP and NPU (that is, the AI service and the NPU driver are bypassed during model execution). This reduces time overheads of a computing path between the APP on the host CPU and the NPU.

Based on the computing device corresponding to FIG. 3 or FIG. 4, if quantities of registers allocated by the NPU to loaded AI models are different, methods for data exchange between a host CPU and an NPU are also different. The following separately provides descriptions.

### 1. One register is allocated to one AI model.

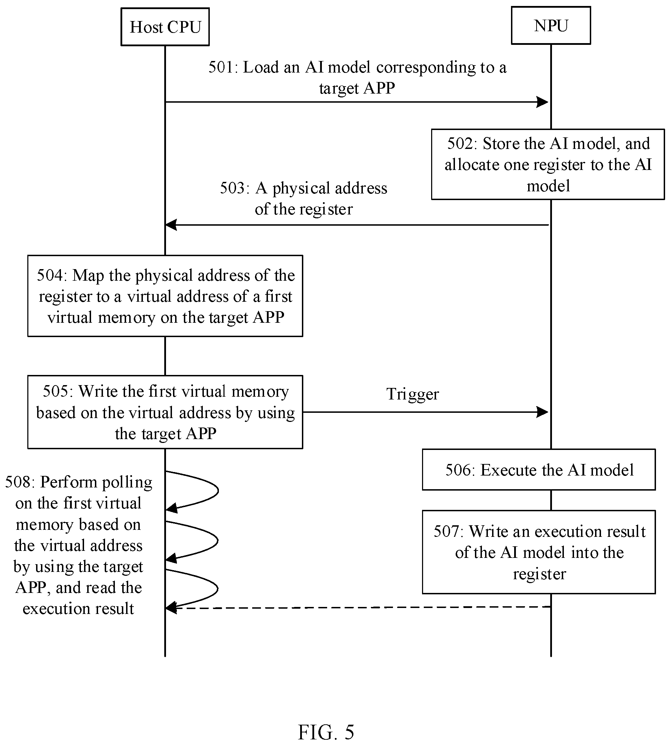

FIG. 5 is a flowchart of a method for data exchange between a host CPU and an NPU according to an embodiment of this application. The method may include the following steps.

501: The host CPU loads an AI model corresponding to the target APP to the NPU.

First, the host CPU loads the AI model corresponding to the target APP to the NPU by using the AI service and the NPU driver. For details, refer to the AI model loading process shown in FIG. 1. Details are not described herein again. 502: The NPU stores the AI model, and allocates one register to the AI model.

After the AI model is loaded to the NPU, the NPU stores the AI model, and allocates one register to the AI model by using the NPU controller. The register is one of the N additionally added registers on the NPU.

503: The NPU sends a physical address of the register to the host CPU.

Because each register has a corresponding physical address, if the NPU allocates one register to the AI model by using the NPU controller, the physical address of the register is obtained. The NPU sends the physical address of the register to the host CPU. Specifically, in some implementations of this application, the physical address of the register may be sent to the NPU driver of the host CPU.

504: The host CPU maps the physical address of the register to a virtual address of a virtual memory on the target APP.

After receiving the physical address of the register sent by the NPU, the host CPU further maps the physical address of the register to the virtual address of the virtual memory on the target APP. In this way, the one register is correspondingly allocated to the AI model loaded to the NPU, and the physical address of the register is mapped to the virtual address of the virtual memory on the target APP. If there are a plurality of AI models (for example, three AI models, which may be corresponding to a same APP or different APPs) loaded to the NPU, one register is allocated to each AI model (for example, three registers are allocated in total), and physical addresses of the registers are mapped to virtual addresses (for example, mapped to three different virtual addresses in total) of different virtual memories on respective APPs in a same manner.

505: The host CPU writes the virtual memory based on the virtual address by using the target APP.

With the virtual address that is on the target APP and that is corresponding to the register, the host CPU may write the virtual memory based on the virtual address by using the target APP. Writing the virtual memory by using the target APP essentially means writing the corresponding register, and then data in the register on the NPU is modified.

506: The NPU executes the AI model.

The register on the NPU is modified (that is, the host CPU writes the virtual memory by using the target APP). When input data is ready, the NPU is directly triggered to control, by using the NPU controller, the arithmetic logic unit to execute the corresponding AI model.

507: The NPU writes an execution result of the AI model into the register.

After the arithmetic logic unit executes the AI model based on the input data, the NPU further writes the execution result of the AI model into the register by using the NPU controller.

508: The host CPU performs polling on the virtual memory based on the virtual address by using the target APP, and reads the execution result.

Because the host CPU accesses the memory through addressing, that the host CPU may read data of the virtual memory in a polling mode based on the virtual address by using the target APP essentially means reading the corresponding data of the register in a polling mode. After a previous round ends and before a current round starts, if the execution result of the AI model is written into the register, the execution result of the AI model can be read in the current round of polling.

It should be noted herein that the host CPU performs writing and polling on a same virtual memory, and the virtual memory is corresponding to the same register. Therefore, whether each modification of data in the register is caused by writing the virtual memory by the target APP or by writing the execution result of the AI model into the register by the NPU controller needs to be known. Some implementations of this application include but are not limited to the following case: Flag bit data may be added to the register, and different values of the flag bit data indicate different causes. For example, when the flag bit data is 1, it indicates that the current data in the register is obtained by writing the virtual memory by the target APP, or when the flag bit data is 0, it indicates that the current data in the register is the execution result of the AI model written by the NPU controller.

It should be noted that, in this implementation of this application, step 508 is performed after step 506 and step 507. Alternatively, step 508 may be performed before step 506 and step 507, or may be performed between step 506 and step 507. This is not specifically limited herein.

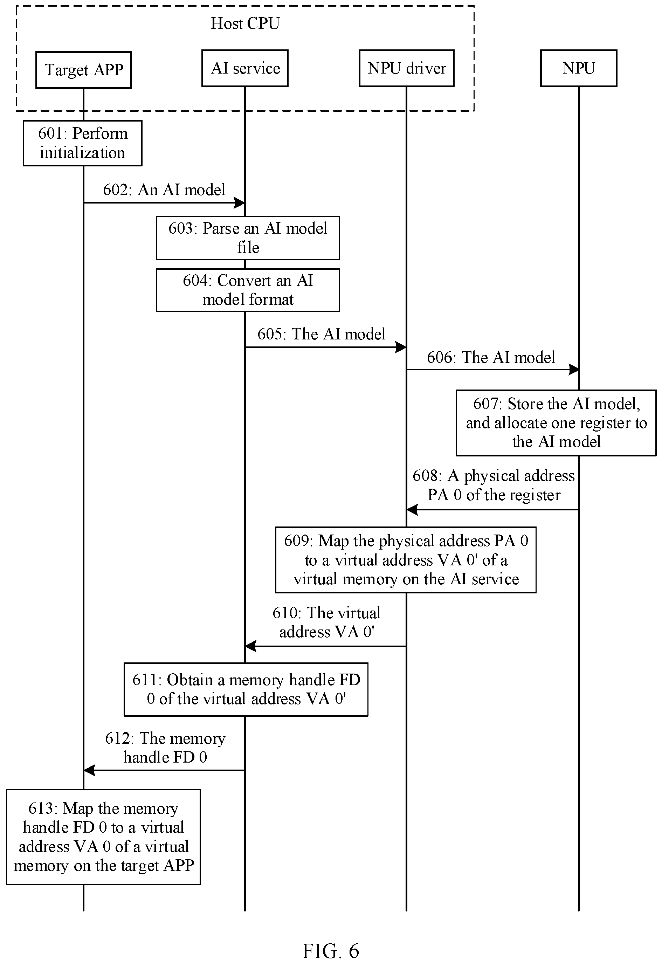

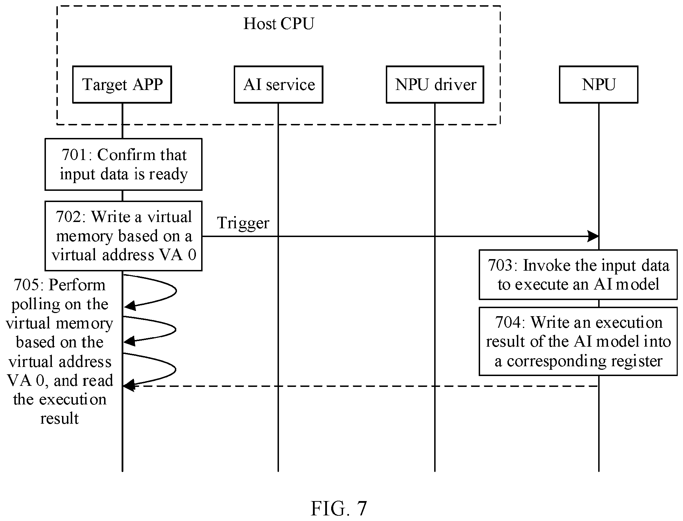

For ease of understanding, the following divides the implementation corresponding to FIG. 5 into two parts, which are separately described. The first part is corresponding to step 501 to step 504, and specifically describes how the physical address of the register is mapped to the virtual address of the virtual memory on the target APP. For the first part, refer to FIG. 6. The second part is corresponding to step 505 to step 508, and specifically describes an execution command process and an execution result response process of AI model inference. For the second part, refer to FIG. 7.

FIG. 6 is a flowchart of mapping a physical address of a register to a virtual address of a virtual memory on a target APP. The procedure may include the following steps.

601: Initialize a target APP.

First, the target APP on the host CPU needs to be initialized, and each target APP may be corresponding to one or more AI models. For ease of understanding, in this embodiment of this application, that the target APP is corresponding to one AI model is used as an example for description.

602: The target APP sends an AI model to the AI service.

After being initialized, the target APP calls a service interface of the AI service on the host CPU, to send an AI model file that is corresponding to the target APP and that can be identified by the AI service to the AI service.

603: The AI service parses the AI model file.

The AI service parses a related file of the AI model.

604: The AI service converts an AI model format.

The AI service converts a parsed AI model file into a format that can be processed by the NPU.

605: The AI service sends the AI model to the NPU driver.

Then, the AI service calls a user-mode interface of the NPU driver of the host CPU, and sends the AI model whose format has been converted to the NPU driver.

606: The NPU driver sends the AI model to the NPU.

The NPU driver is further switched from a user mode to a kernel mode, configures a related register and interface of the NPU, and loads the AI model to the NPU.

607: The NPU stores the AI model, and allocates one register to the AI model.

After the AI model is loaded to the NPU, the NPU stores the AI model, and allocates one register to the AI model by using the NPU controller. The register is one of the N additionally added registers on the NPU, and N≥1.

608: The NPU sends a physical address PA 0 of the register to the NPU driver.

Because each register has a corresponding physical address (physical address, PA), if the NPU allocates one register to the AI model by using the NPU controller, the physical address of the register is obtained. In this embodiment of this application, assuming that the physical address of the register allocated to the AI model is PA 0, the NPU sends PA 0 to the NPU driver of the host CPU.

609: The NPU driver maps the physical address PA 0 to a virtual address VA 0' of a virtual memory on the AI service. The NPU driver maps the physical address PA 0 to virtual memory space of the AI service, to obtain the virtual address (virtual address, VA) of the virtual memory on the AI service. The virtual address may be denoted as VA 0'.

610: The NPU driver sends the virtual address VA 0' to the AI service.

611: The AI service obtains a memory handle FD 0 of the virtual address VA 0'.

The target APP and the AI service belong to different processes, data exchange between the APP and the AI service belongs to inter-process data exchange, and virtual memories of different processes cannot access each other, but the target APP and the AI service need to share the same register. Therefore, the AI service further needs to be used to map the virtual address VA 0' to virtual memory space of the target APP, to obtain a virtual address VA 0 that is of a virtual memory on the target APP and that is corresponding to the virtual address VA 0'. Specifically, the AI service may obtain the memory handle FD 0 of the virtual address VA 0'.

612: The AI service sends the memory handle FD 0 to the target APP.

613: The target APP maps the memory handle FD 0 to the virtual address VA 0 of the virtual memory on the target APP.

The host CPU may map the memory handle FD 0 to the virtual address VA 0 of the virtual memory on the target APP by using the target APP. In effect, VA 0 is the virtual address that is on the target APP and that is of the corresponding register on the NPU.

It should be noted that, in some implementations of this application, the virtual address VA 0 that is of the virtual memory on the target APP and that is corresponding to the virtual address VA 0' may be obtained by sending the memory handle FD 0 by the AI service, or may be obtained in another manner. For example, alternatively, the AI service may directly send the virtual address VA 0' to the target APP, and then the target APP directly maps the virtual address VA 0' to the virtual address VA 0 of the virtual memory on the target APP. A manner of obtaining the virtual address VA 0 that is of the virtual memory on the target APP and that is corresponding to the virtual address VA 0' is not specifically limited herein.

It should also be noted that, in some implementations of this application, it is assumed that the target APP is integrated with a related function of the AI service, so that the target APP can directly interact with the NPU driver, that is, the target APP can interact with the NPU driver without a service interface provided by the AI service. In this case, after receiving the physical address PA 0 that is of the register allocated to the target APP and that is sent by the NPU controller, the NPU driver may directly map the physical address PA 0 to virtual memory space of the target APP, to obtain the virtual address VA 0 of the virtual memory on the target APP. The virtual address VA 0' of the virtual memory on the AI service no longer needs to be obtained.

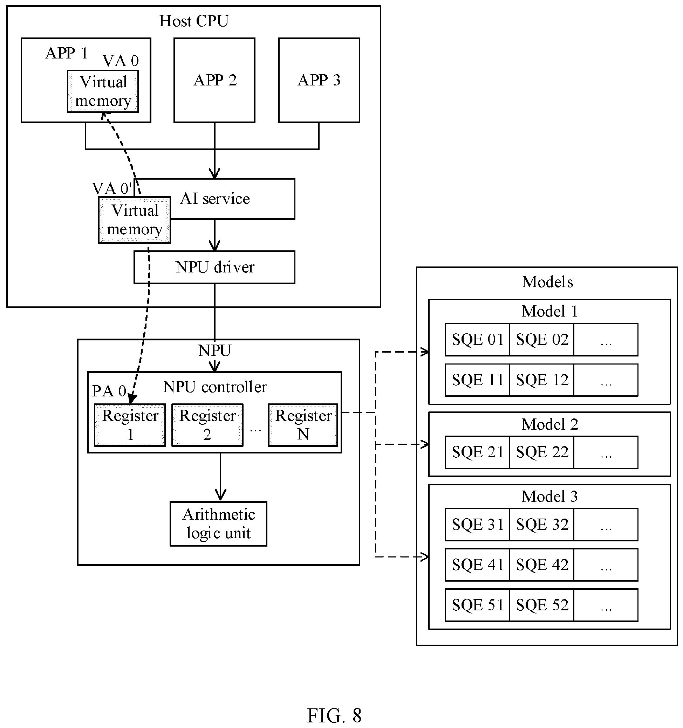

In conclusion, in the implementation corresponding to FIG. 6, after the AI model is loaded to the NPU, the NPU allocates one register to the AI model. In addition, the physical address of the register is mapped to the virtual address of the virtual memory on the target APP. Actually, the register that is on the NPU and that is corresponding to the AI model may be directly read/written by using the target APP. This means that a direct connection path exists between the target APP and the NPU. As shown in FIG. 8, that the N registers are located in the NPU controller and the target APP is an APP 1 is used as an example, to vividly illustrate a schematic diagram of finally mapping the physical address PA 0 of the register to the virtual address VA 0 of the virtual memory on the APP 1 by using the AI service in the embodiment corresponding to FIG. 6. Details are not described herein.

Next, FIG. 7 is a flowchart of an execution command process and an execution result response process of AI model inference. The AI model inference may include the following steps.

701: The target APP confirms that input data is ready.

First, the target APP needs to confirm that the input data is ready. That the input data is ready means that data used for performing AI model inference has been obtained. For example, for an intelligent vehicle, each frame of image shot by a camera is automatically stored in a storage module.

702: The target APP writes the virtual memory (that is, writes VA 0) based on the virtual address VA 0.

After the input data is ready, the corresponding target APP writes the virtual memory (that is, writes VA 0) on the target APP based on the virtual address VA 0. Writing VA 0 essentially means modifying the corresponding register on the NPU. Then, the NPU controller is immediately triggered to control the arithmetic logic unit to execute the AI model (modification performed on the register may trigger the NPU controller to work).

703: The NPU invokes the input data to execute the AI model.

When the target APP writes VA 0, the NPU controller is triggered to invoke the input data, and further control the arithmetic logic unit to execute the corresponding AI model.

704: The NPU writes an execution result of the AI model into the corresponding register.

After the arithmetic logic unit executes the AI model based on the input data, the NPU further writes the execution result of the AI model into the register by using the NPU controller.

705: The target APP performs polling on the virtual memory based on the virtual address VA 0, and reads the execution result (that is, reads VA 0).

Finally, that the target APP may read data of the virtual memory on the target APP in a polling mode based on the virtual address VA 0 essentially means reading the corresponding data of the register with the physical address PA 0 in a polling mode. After a previous round ends and before a current round starts, if the execution result of the AI model is written into the register, the execution result of the AI model can be read in the current round of polling.

It should be noted that, in this implementation of this application, step 705 is performed after step 703 and step 704. Alternatively, step 705 may be performed before step 703 and step 704, or may be performed between step 703 and step 704. This is not specifically limited herein.

In conclusion, it can be learned from the implementation corresponding to FIG. 7 that, in an entire procedure in which the target APP delivers an AI model execution command (that is, directly writes VA 0 to trigger the NPU to execute the AI model), and obtains the execution result of the AI model (that is, reads VA 0 to obtain the execution result of the AI model), a computing path bypasses the AI service and the NPU driver, and there are only read/write overheads of the register, which can be totally ignored compared with overheads in an existing solution (as shown in FIG. 2). In the existing solution, a command path and a response path are time-consuming. This is mainly caused by the following factors: (1) The APP and AI service perform inter-process message communication. (2) The NPU driver is switched between a user mode and a kernel mode. (3) The host CPU on which the NPU driver is located and the NPU are two systems, and perform inter-system communication. In an AI model inference process in this embodiment of this application in which these factors are not involved, there are only read/write overheads of the register. This greatly improves AI model inference efficiency, and also improves real-time quality of the AI model inference.

It should be noted that, in the foregoing implementation of this application, the target APP performs polling on the virtual memory based on the virtual address VA 0, and reads the execution result. In some implementations of this application, alternatively, the target APP may receive an interrupt signal sent by the NPU controller, and read the execution result of the AI model in response to the interrupt signal. Compared with the foregoing implementation, this manner has an advantage: The target APP does not need to repeatedly read VA 0, and therefore power consumption is reduced. A disadvantage lies in: The interrupt signal sent by the NPU controller to the target APP can be received by the target APP only after passing through the NPU driver and the AI service. In this case, a time for the response path is not saved, but only a time for the command path is saved. This is because the target APP still directly writes VA 0 to trigger the NPU to execute the AI model. In general, time overheads of a computing path are reduced. 2. Two registers are allocated to one AI model.

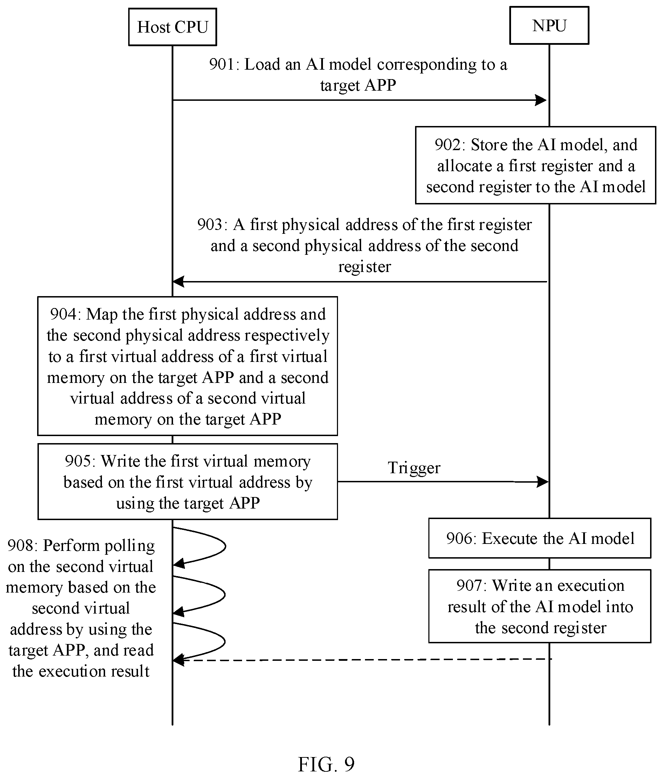

FIG. 9 is another flowchart of a method for data exchange between a host CPU and an NPU according to an embodiment of this application. The method may include the following steps.

901: The host CPU loads an AI model corresponding to the target APP to the NPU.

First, the host CPU loads the AI model corresponding to the target APP to the NPU by using the AI service and the NPU driver. For details, refer to the AI model loading process shown in FIG. 1. Details are not described herein again. 902: The NPU stores the AI model, and allocates a first register and a second register to the AI model.

After the AI model is loaded to the NPU, the NPU stores the AI model, and allocates two registers, namely, the first register and the second register, to the AI model by using the NPU controller. Both the two registers belong to the N additionally added registers on the NPU, and N≥2.

903: The NPU sends a first physical address of the first register and a second physical address of the second register to the host CPU.

Because each register has a corresponding physical address, if the NPU allocates two registers to the AI model by using the NPU controller, physical addresses of the two registers, namely, the first physical address and the second physical address, are obtained. The NPU sends the two physical addresses of the two registers to the host CPU. Specifically, in some implementations of this application, the two physical addresses of the two registers may be sent to the NPU driver of the host CPU.

904: The host CPU maps the first physical address and the second physical address respectively to a first virtual address of a first virtual memory on the target APP and a second virtual address of a second virtual memory on the target APP.

After receiving the first physical address and the second physical address that are sent by the NPU, the host CPU further maps the two physical addresses respectively to the first virtual address of the first virtual memory on the target APP and the second virtual address of the second virtual memory on the target APP. In this way, the two registers are correspondingly allocated to the AI model loaded to the NPU, and the two physical addresses of the two registers are mapped respectively to the two virtual addresses of the two virtual memories on the target APP. If there are a plurality of AI models (for example, three AI models, which may be corresponding to a same APP or different APPs) loaded to the NPU, two registers are allocated to each AI model (for example, six registers are allocated in total), and physical addresses of the registers are mapped to virtual addresses (for example, mapped to six different virtual addresses in total) of virtual memories on their respective APPs in a same manner.

905: The host CPU writes the first virtual memory based on the first virtual address by using the target APP.

With the two virtual addresses that are on the target APP and that are corresponding to the registers, the host CPU may write the first virtual memory based on one of the virtual addresses (for example, the first virtual address) by using the target APP. Writing the first virtual memory by using the target APP essentially means writing the corresponding first register, and then data in the first register on the NPU is modified.

906: The NPU executes the AI model.

The first register on the NPU is modified (that is, the host CPU writes the first virtual memory by using the target APP). When input data is ready, the NPU is directly triggered to control, by using the NPU controller, the arithmetic logic unit to execute the corresponding AI model.

907: The NPU writes an execution result of the AI model into the second register.

After the arithmetic logic unit executes the AI model based on the input data, the NPU further writes the execution result of the AI model into the second register by using the NPU controller.

908: The host CPU performs polling on the second virtual memory based on the second virtual address by using the target APP, and reads the execution result.

Because the host CPU accesses the memories through addressing, that the host CPU may read data of the second virtual memory in a polling mode based on the second virtual address by using the target APP essentially means reading corresponding data of the second register in a polling mode. After a previous round ends and before a current round starts, if the execution result of the AI model is written into the second register, the execution result of the AI model can be read in the current round of polling.

It should be noted that, in this implementation of this application, step 908 is performed after step 906 and step 907. Alternatively, step 908 may be performed before step 906 and step 907, or may be performed between step 906 and step 907. This is not specifically limited herein.

It should also be noted herein that the host CPU writes the first virtual memory by using the target APP and performs polling on the second virtual memory, the first virtual memory is corresponding to the first register, and the second virtual memory is corresponding to the second register. In other words, an execution command (namely, a command path) of AI model inference is completed by using one register, and an execution result response of the AI model is completed by using the other register. This has an advantage: Different computing paths use different registers. The process is easy to operate, and it is not prone to confuse the data.

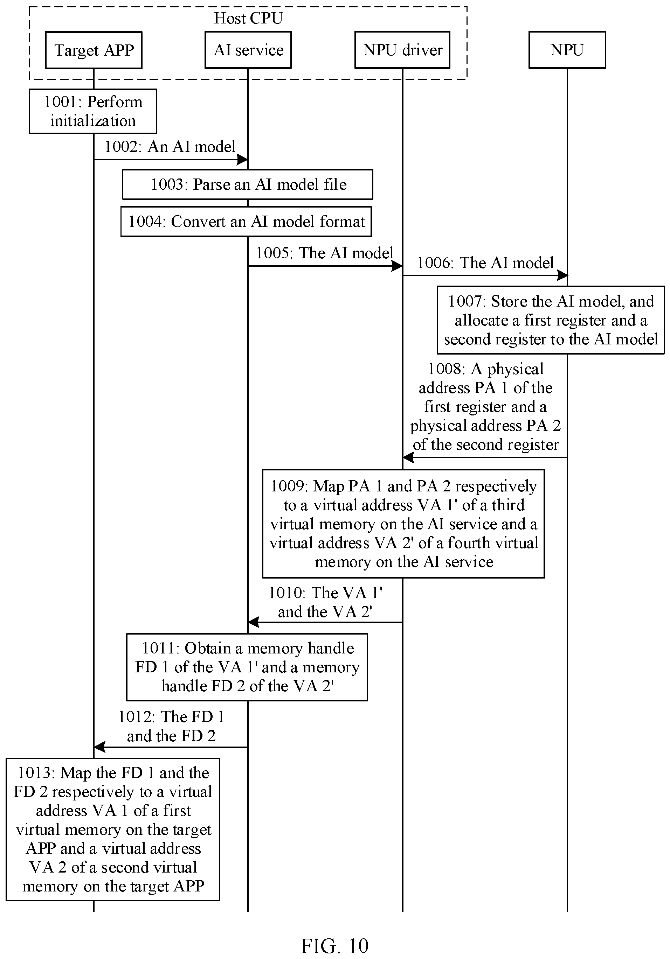

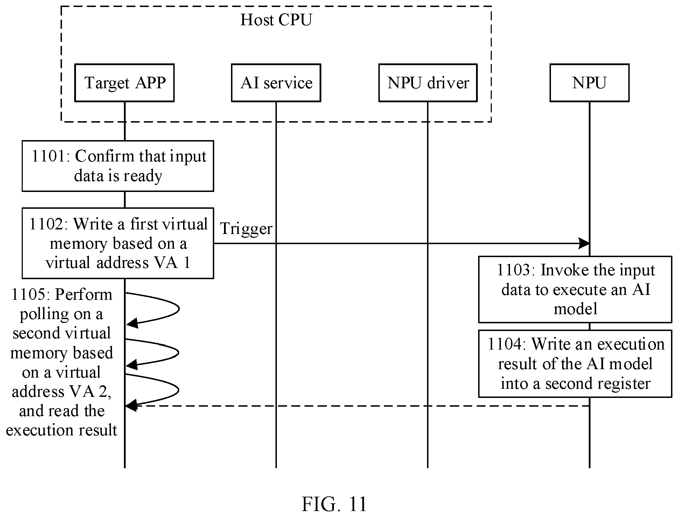

Similarly, for ease of understanding, the following divides the implementation corresponding to FIG. 9 into two parts, which are separately described. The first part is corresponding to step 901 to step 904, and specifically describes how the physical addresses of the two registers corresponding to the target APP are mapped to the virtual addresses of the two virtual memories on the target APP. For the first part, refer to FIG. 10. The second part is corresponding to step 905 to step 908, and specifically describes an execution command process and an execution result response process of AI model inference. For the second part, refer to FIG. 11.

FIG. 10 is a flowchart of mapping physical addresses of two registers corresponding to an AI model to virtual addresses of two virtual memories on a target APP. The procedure may include the following steps.

1001: Initialize a target APP.

1002: The target APP sends an AI model to the AI service.

1003: The AI service parses an AI model file.

1004: The AI service converts an AI model format.

1005: The AI service sends the AI model to the NPU driver.

1006: The NPU driver sends the AI model to the NPU.

Step 1001 to step 1006 are similar to step 601 to step 606 in the embodiment corresponding to FIG. 6. For a specific process, refer to FIG. 6. Details are not described herein again.

1007: The NPU stores the AI model, and allocates a first register and a second register to the AI model.

After the AI model is loaded to the NPU, the NPU stores the AI model, and allocates two registers, which are respectively used for a command and a response, to the AI model by using the NPU controller. The two registers may be referred to as the first register and the second register. Both the two registers belong to the N additionally added registers on the NPU.

1008: The NPU sends a physical address PA 1 of the first register and a physical address PA 2 of the second register to the NPU driver.

Because each register has a corresponding physical address, if the NPU allocates two registers to the AI model by using the NPU controller, the physical addresses of the two registers are obtained. In this embodiment of this application, assuming that the physical address of the first register allocated to the AI model is PA 1 and the physical address of the second register allocated to the AI model is PA 2, the NPU sends PA 1 and PA 2 to the NPU driver of the host CPU.

1009: The NPU driver maps PA 1 and PA 2 respectively to a virtual address VA 1' of a third virtual memory on the AI service and a virtual address VA 2' of a fourth virtual memory on the AI service.

The NPU driver maps the physical address PA 1 and the physical address PA 2 to virtual memory space of the AI service, to obtain the virtual address VA 1' of the third virtual memory on the AI service and the virtual address VA 2' of the fourth virtual memory on the AI service.

1010: The NPU driver sends VA 1' and VA 2' to the AI service.

1011: The AI service obtains a memory handle FD 1 of VA 1' and a memory handle FD 2 of VA 2'.

The target APP and the AI service belong to different processes, data exchange between the APP and the AI service belongs to inter-process data exchange, and virtual memories of different processes cannot access each other, but the target APP and the AI service need to share the two registers. Therefore, the AI service further needs to be used to map VA 1' and VA 2' to virtual memory space of the target APP, to obtain a virtual address VA 1 that is of a first virtual memory on the target APP and that is corresponding to VA 1' and a virtual address VA 2 that is of a second virtual memory on the target APP and that is corresponding to VA 2'. Specifically, the AI service may obtain the memory handle FD 1 of VA 1' and the memory handle FD 2 of VA 2'.

1012: The AI service sends FD 1 and FD 2 to the target APP.

1013: The target APP maps FD 1 and FD 2 respectively to the virtual address VA 1 of the first virtual memory on the target APP and the virtual address VA 2 of the second virtual memory on the target APP.

The host CPU may map the memory handle FD 1 and the memory handle FD 2 respectively to the virtual address VA 1 of the first virtual memory on the target APP and the virtual address VA 2 of the second virtual memory on the target APP by using the target APP. In effect, VA 1 is the virtual address that is on the target APP and that is of the corresponding first register on the NPU, and VA 2 is the virtual address that is on the target APP and that is of the corresponding second register on the NPU.

It should be noted that, in some implementations of this application, the virtual address VA 1 that is of the first virtual memory on the target APP and that is corresponding to VA 1' and the virtual address VA 2 that is of the second virtual memory on the target APP and that is corresponding to VA 2' may be obtained by sending the memory handle FD 1 and the memory handle FD 2 by the AI service, or may be obtained in another manner. For example, alternatively, the AI service may directly send VA 1' and VA 2' to the target APP, and then the target APP directly maps VA 1' and VA 2' respectively to the virtual address VA 1 of the first virtual memory on the target APP and the virtual address VA 2 of the second virtual memory on the target APP. A manner of obtaining the virtual address VA 1 that is of the first virtual memory on the target APP and that is corresponding to VA 1' and the virtual address VA 2 that is of the second virtual memory on the target APP and that is corresponding to VA 2' is not specifically limited herein.

It should also be noted that, in some implementations of this application, it is assumed that the target APP is integrated with a related function of the AI service, so that the target APP can directly interact with the NPU driver, that is, the target APP can interact with the NPU driver without a service interface provided by the AI service. In this case, after receiving the physical address PA 1 of the first register allocated to the target APP and the physical address PA 2 of the second register allocated to the target APP, where PA 1 and PA 2 are sent by the NPU controller, the NPU driver may separately map PA 1 and PA 2 directly to virtual memory space of the target APP, to obtain the virtual address VA 1 of the first virtual memory on the target APP and the virtual address VA 2 of the second virtual memory on the target APP. The virtual address VA 1' of the third virtual memory on the AI service and the virtual address VA 2' of the fourth virtual memory on the AI service no longer need to be obtained.

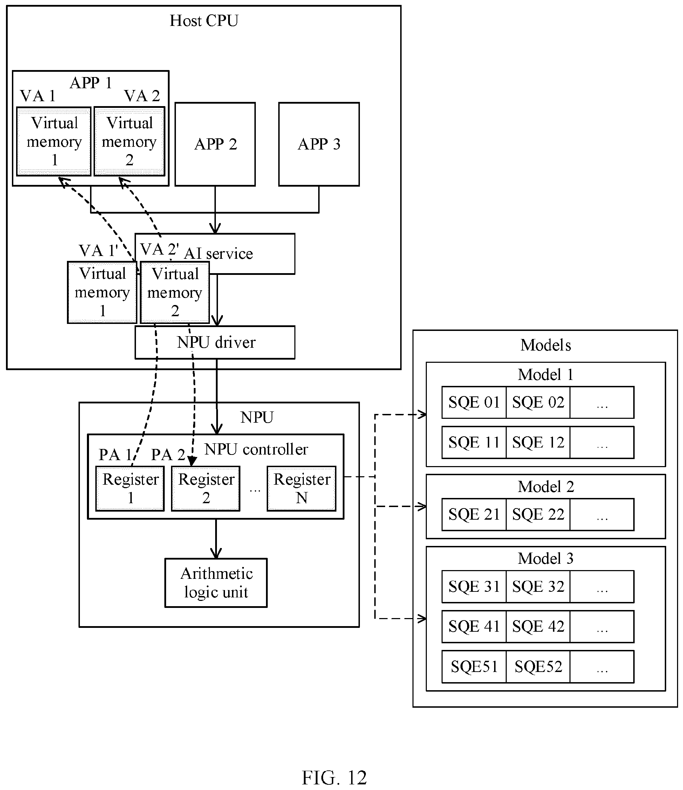

In conclusion, in the implementation corresponding to FIG. 10, after the AI model is loaded to the NPU, the NPU allocates two registers, namely, the first register and the second register, to the AI model. In addition, the physical addresses of the two registers are mapped to the virtual addresses of the two virtual memories on the target APP. Actually, the target APP may directly read one register and write the other register. This means that two direct connection paths exist between the target APP and the NPU. As shown in FIG. 12, that the N registers are located in the NPU controller and the target APP is an APP 1 is used as an example, to vividly illustrate a schematic diagram of finally mapping the physical address PA 1 of the first register and the physical address PA 2 of the second register to the virtual address VA 1 of the first virtual memory on the target APP and the virtual address VA 2 of the second virtual memory on the target APP by using the AI service in the embodiment corresponding to FIG. 10. PA 1 and VA 1 are used to implement an execution command process (namely, a command path) of AI model inference, and PA 2 and VA 2 are used to implement an execution result response process (namely, a response path) of the AI model inference. Next, FIG. 11 is a flowchart of an execution command process and an execution result response process of AI model inference. The AI model inference may include the following steps.

1101: The target APP confirms that input data is ready.

First, the target APP needs to confirm that the input data is ready. That the input data is ready means that data used for performing AI model inference has been obtained. For example, for an intelligent vehicle, each frame of image shot by a camera is automatically stored in a storage module.

1102: The target APP writes the first virtual memory (that is, writes VA 1) based on the virtual address VA 1.

After the input data is ready, the corresponding target APP writes the first virtual memory (that is, writes VA 1) on the target APP based on the virtual address VA 1. Writing VA 1 essentially means modifying the corresponding first register (for example, a register 1 in FIG. 12) on the NPU. Then, the NPU controller is immediately triggered to control the arithmetic logic unit to execute the AI model (modification performed on the first register may trigger the NPU controller to work).

1103: The NPU invokes the input data to execute the AI model.

When the target APP writes VA 1, the NPU controller is triggered to invoke the input data, and further control the arithmetic logic unit to execute the corresponding AI model.

1104: The NPU writes an execution result of the AI model into the second register.

After the arithmetic logic unit executes the AI model based on the input data, the NPU further writes the execution result of the AI model into the second register (for example, a register 2 in FIG. 12) by using the NPU controller.

1105: The target APP performs polling on the second virtual memory based on the virtual address VA 2, and reads the execution result (that is, reads VA 2).

Finally, that the target APP may read data of the second virtual memory on the target APP in a polling mode based on the virtual address VA 2 essentially means reading corresponding data of the second register with the physical address PA 2 in a polling mode. After a previous round ends and before a current round starts, if the execution result of the AI model is written into the second register, the execution result of the AI model can be read in the current round of polling.

It should be noted that, in this implementation of this application, step 1105 is performed after step 1103 and step 1104. Alternatively, step 1105 may be performed before step 1103 and step 1104, or may be performed between step 1103 and step 1104. This is not specifically limited herein.

In conclusion, it can be learned from the implementation corresponding to FIG. 11 that, in an entire procedure in which the target APP delivers an AI model execution command (that is, directly writes VA 1 to trigger the NPU to execute the AI model), and obtains the execution result of the AI model (that is, reads VA 2 to obtain the execution result of the AI model), computing paths bypass the AI service and the NPU driver, and there are only read/write overheads of the registers, which can be totally ignored compared with overheads in an existing solution (as shown in FIG. 2). This improves real-time quality of AI model inference. In addition, different computing paths use different registers. The process is easy to operate, and it is not prone to confuse the information.

It should be noted that, in the foregoing implementation of this application, the target APP performs polling on the virtual memory based on the virtual address VA 2, and reads the execution result. In some implementations of this application, alternatively, the target APP may receive an interrupt signal sent by the NPU controller, and read the execution result of the AI model in response to the interrupt signal. Compared with the foregoing implementation, this manner has an advantage: The target APP does not need to repeatedly read VA 2, and therefore power consumption is reduced. A disadvantage lies in: The interrupt signal sent by the NPU controller to the target APP can be received by the target APP only after passing through the NPU driver and the AI service. In this case, a time for the response path is not saved, but only a time for the command path is saved. This is because the target APP still directly writes VA 0 to trigger the NPU to execute the AI model. In general, time overheads of a computing path are reduced.

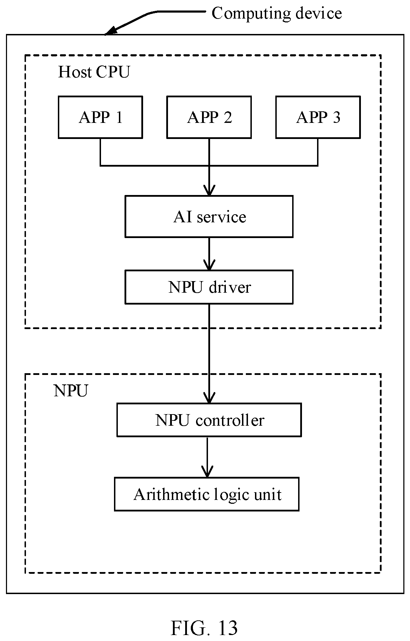

The foregoing embodiments can be implemented based on the computing device corresponding to FIG. 3 or FIG. 4, that is, the N registers have been added to the NPU in advance (that is, the chip NPU is modified). In a scenario in which a chip cannot be modified, for a computing device on which a chip NPU has not been modified in FIG. 13, the computing device includes a host CPU and an NPU, one or more APPs run on the host CPU (FIG. 13 shows three APPs: an APP 1, an APP 2, and an APP 3), the host CPU includes an AI service and an NPU driver, the NPU includes an NPU controller and an arithmetic logic unit, and N≥1. Functions of each module of the host CPU and the NPU and the APP running on the host CPU are similar to those in the embodiment corresponding to FIG. 3. Details are not described herein again.

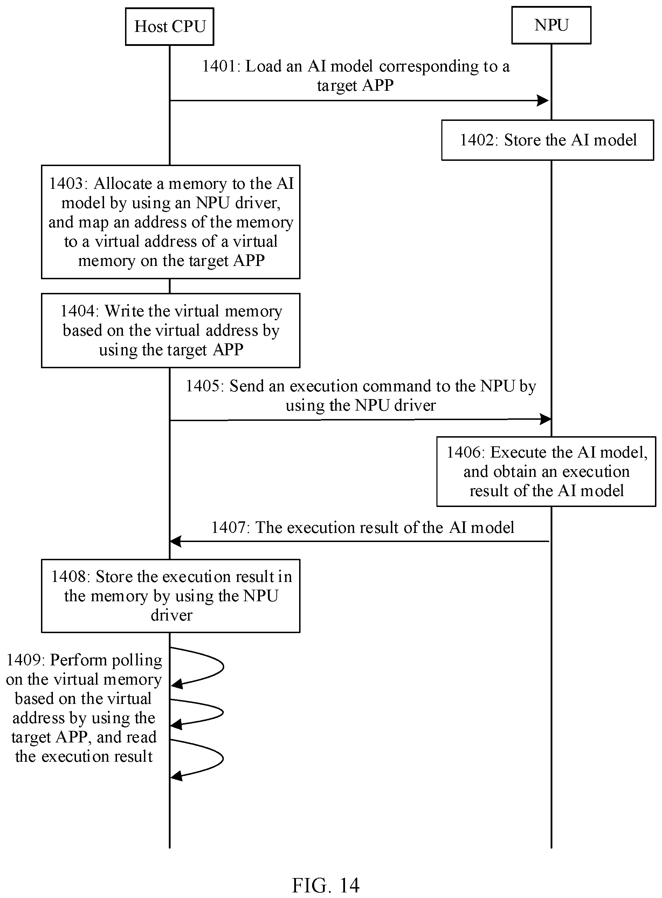

In the scenario in which an NPU chip cannot be modified in FIG. 13, N registers cannot be added to the NPU side in advance, and in this case, a memory may be allocated on the NPU driver of the host CPU to simulate a register on the NPU side (which may also be referred to as a software register). The NPU driver may check, in a polling mode, whether the memory changes, to trigger the NPU to perform AI model inference, and write an execution result of an AI model into the memory. FIG. 14 is another flowchart of a method for data exchange between a host CPU and an NPU according to an embodiment of this application. The flowchart is implemented based on the computing device shown in FIG. 13, and the procedure may include the following steps.

1401: The host CPU loads an AI model corresponding to the target APP to the NPU.

First, the host CPU loads the AI model corresponding to the target APP to the NPU by using the AI service and the NPU driver. For details, refer to the AI model loading process shown in FIG. 1. Details are not described herein again. 1402: The NPU stores the AI model.

After the AI model is loaded to the NPU, the NPU stores the AI model.

1403: The host CPU allocates a memory to the AI model by using the NPU driver, and maps an address of the memory to a virtual address of a virtual memory on the target APP.

After loading the AI model to the NPU, the host CPU further allocates the memory (the memory is a memory allocated on the NPU driver) to the AI model by using the NPU driver, and maps the address of the memory to the virtual address of the virtual memory on the target APP. In this way, the one memory on the NPU driver is correspondingly allocated to the AI model loaded to the NPU, and the address of the memory is further mapped to the virtual address of the virtual memory on the target APP. If there are a plurality of AI models (for example, four AI models, which may be corresponding to a same APP or different APPs) loaded to the NPU, one memory on the NPU driver is allocated to each AI model (for example, four memories are allocated in total), and addresses of the memories are mapped to virtual addresses (for example, mapped to four different virtual addresses in total) of different virtual memories on their respective APPs in a same manner.

1404: The host CPU writes the virtual memory based on the virtual address by using the target APP.

With the virtual address that is on the target APP and that is corresponding to the memory on the NPU driver, the host CPU may write the virtual memory based on the virtual address by using the target APP. Writing the virtual memory by using the target APP essentially means writing the corresponding memory on the NPU driver, and then data in the memory on the NPU driver is modified.

1405: The host CPU sends an execution command to the NPU by using the NPU driver.

The memory on the NPU driver is modified (that is, the host CPU writes the virtual memory by using the target APP). When input data is ready, the NPU driver is directly triggered to send the execution command to the NPU, where the execution command is used to indicate the NPU to control, by using the NPU controller, the arithmetic logic unit to execute the AI model.

1406: The NPU executes the AI model, and obtains an execution result of the AI model.

After the NPU receives, by using the NPU controller, the execution command sent by the NPU driver, and when the input data is ready, the NPU further controls, by using the NPU controller, the arithmetic logic unit to execute the corresponding AI model, and obtains the execution result of the AI model.

1407: The NPU sends the execution result of the AI model to the host CPU.

After executing the AI model, the NPU sends the execution result of the AI model to the NPU driver of the host CPU. 1408: The host CPU stores the execution result in the memory by using the NPU driver.

The host CPU receives, by using the NPU driver, the execution result sent by the NPU, and then stores the execution result in the memory by using the NPU driver.

1409: The host CPU performs polling on the virtual memory based on the virtual address by using the target APP, and reads the execution result.

Finally, that the host CPU may read data of the virtual memory in a polling mode based on the virtual address by using the target APP essentially means reading the corresponding data of the memory on the NPU driver in a polling mode. After a previous round ends and before a current round starts, if the execution result of the AI model is written into the memory, the execution result of the AI model can be read in the current round of polling.

It should be noted herein that the host CPU performs writing and polling on a same virtual memory, and the virtual memory is corresponding to the same memory on the NPU driver. Therefore, whether each modification of data in the memory is caused by writing the virtual memory by the target APP or by writing the execution result of the AI model into the memory by the NPU driver needs to be known. Some implementations of this application include but are not limited to the following case: Flag bit data may be added to the memory on the NPU driver, and different values of the flag bit data indicate different causes. For example, when the flag bit data is 1, it indicates that the current data in the memory is obtained by writing the virtual memory by the target APP; or when the flag bit data is 0, it indicates that the current data in the memory is the execution result of the AI model written by the NPU driver.

It should be noted that, in this implementation of this application, step 1409 is performed after steps 1406 to 1408. Alternatively, step 1409 may be performed before steps 1406 to 1408, or may be performed between any two of steps 1406 to 1408. This is not specifically limited herein.

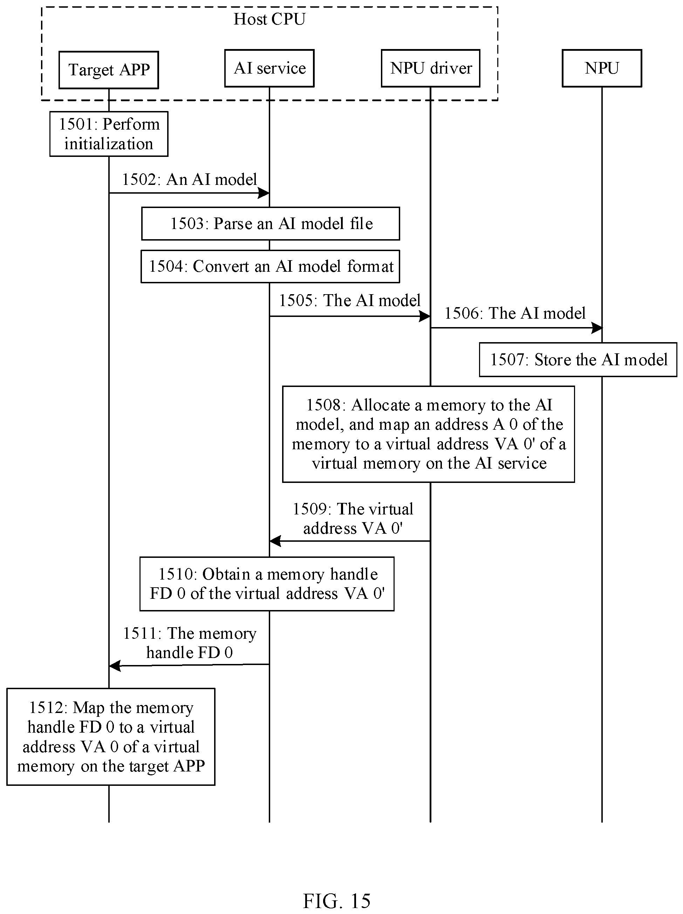

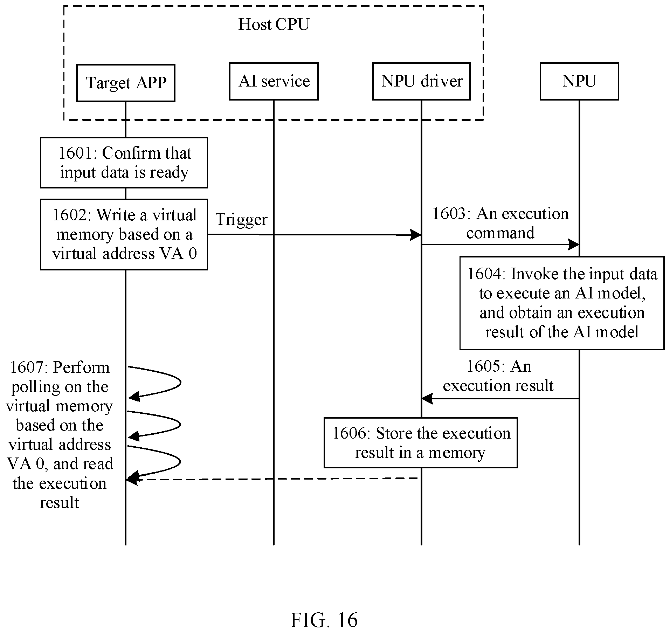

Similarly, for ease of understanding, the following divides the implementation corresponding to FIG. 14 into two parts, which are separately described. The first part is corresponding to step 1401 to step 1403, and specifically describes how the address of the memory on the NPU driver is mapped to the virtual address of the virtual memory on the target APP. For the first part, refer to FIG. 15. The second part is corresponding to step 1404 to step 1409, and specifically describes an execution command process and an execution result response process of AI model inference. For the second part, refer to FIG. 16.

FIG. 15 is a flowchart of mapping an address of a memory on an NPU to a virtual address of a virtual memory on a target APP. The procedure may include the following steps.

1501: Initialize a target APP.

1502: The target APP sends an AI model to the AI service.

1503: The AI service parses an AI model file.

1504: The AI service converts an AI model format.

1505: The AI service sends the AI model to the NPU driver.

1506: The NPU driver sends the AI model to the NPU.

Step 1501 to step 1506 are similar to step 601 to step 606 in the embodiment corresponding to FIG. 6. For a specific process, refer to FIG. 6. Details are not described herein again.

1507: The NPU stores the AI model.

1508: The NPU driver allocates a memory to the AI model, and maps an address A 0 of the memory to a virtual address VA 0' of a virtual memory on the AI service.

After the AI model is loaded to the NPU, the NPU driver allocates the memory to the AI model, where the memory is a memory allocated on the NPU driver; and maps the address A 0 of the memory to virtual memory space of the AI service, to obtain the virtual address VA 0' of the virtual memory on the AI service.

1509: The NPU driver sends the virtual address VA 0' to the AI service.

1510: The AI service obtains a memory handle FD 0 of the virtual address VA 0'.

1511: The AI service sends the memory handle FD 0 to the target APP.

1512: The target APP maps the memory handle FD 0 to the virtual address VA 0 of the virtual memory on the target APP.

Step 1509 to step 1512 are similar to step 610 to step 613 in the embodiment corresponding to FIG. 6. For a specific process, refer to FIG. 6. Details are not described herein again.

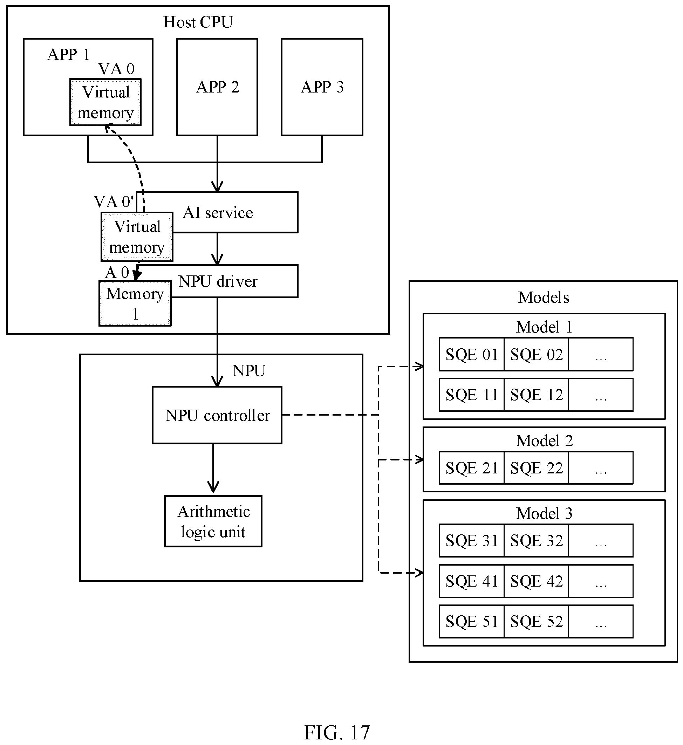

In conclusion, it can be learned from the implementation corresponding to FIG. 15 that, after the AI model is loaded to the NPU, the NPU driver allocates one memory located on the NPU driver to the AI model, and maps the address of the memory to the virtual address of the virtual memory on the target APP. Actually, the memory that is on the NPU driver and that is corresponding to the AI model may be directly read/written by using the target APP. This means that a direct connection path exists between the target APP and the NPU driver. In this way, time overheads of a computing path between the host CPU and the NPU are reduced without modifying the chip NPU. As shown in FIG. 17, that the target APP is an APP 1 is used as an example, to vividly illustrate a schematic diagram of mapping the address A 0 of the memory on the NPU driver to the virtual address VA 0 of the virtual memory on the APP 1 in the embodiment corresponding to FIG. 15. Details are not described herein.

Next, FIG. 16 is a flowchart of an execution command process and an execution result response process of AI model inference. The AI model inference may include the following steps.

1601: The target APP confirms that input data is ready.

1602: The target APP writes the virtual memory (that is, writes VA 0) based on the virtual address VA 0.

Step 1601 and step 1602 are similar to step 701 and step 702 in the embodiment corresponding to FIG. 7. For a specific process, refer to FIG. 7. Details are not described herein again.

1603: The NPU driver sends an execution command to the NPU.

When the target APP writes VA 0, the NPU driver is triggered to send the execution command to the NPU, where the execution command is used to indicate the NPU to execute the loaded AI model.

1604: The NPU invokes the input data to execute the AI model, and obtains an execution result of the AI model. When receiving the execution command sent by the NPU driver, the NPU triggers the NPU controller to invoke the input data, further controls the arithmetic logic unit to execute the corresponding AI model, and obtains the execution result of the AI model after execution of the AI model is completed.

1605: The NPU sends the execution result to the NPU driver.

1606: The NPU driver stores the execution result in the memory.

1607: The target APP performs polling on the virtual memory based on the virtual address VA 0, and reads the execution result (that is, reads VA 0).

Finally, that the target APP may read data of the virtual memory on the target APP in a polling mode based on the virtual address VA 0 essentially means reading the corresponding data of the memory with the memory address A 0 on the NPU driver in a polling mode. After a previous round ends and before a current round starts, if the execution result of the AI model is written into the memory, the execution result of the AI model can be read in the current round of polling.

Similarly, it should be noted that, in this implementation of this application, step 1607 is performed after steps 1604 to 1606. Alternatively, step 1607 may be performed before steps 1604 to 1606, or may be performed between any two of steps 1604 to 1606. This is not specifically limited herein.

In conclusion, it can be learned from the implementation corresponding to FIG. 16 that, in comparison with an existing solution, in an AI model inference process in this implementation, inter-process time overheads caused between the target APP and the AI service and time overheads caused when the NPU driver is switched from a user mode to a kernel mode are reduced. Compared with the embodiment corresponding to FIG. 7 in this application, time overheads caused between the NPU driver and the NPU controller are not reduced, but an advantage of this implementation lies in that a structure of the NPU does not need to be modified. In other words, AI model execution efficiency can be improved without modifying a chip structure.

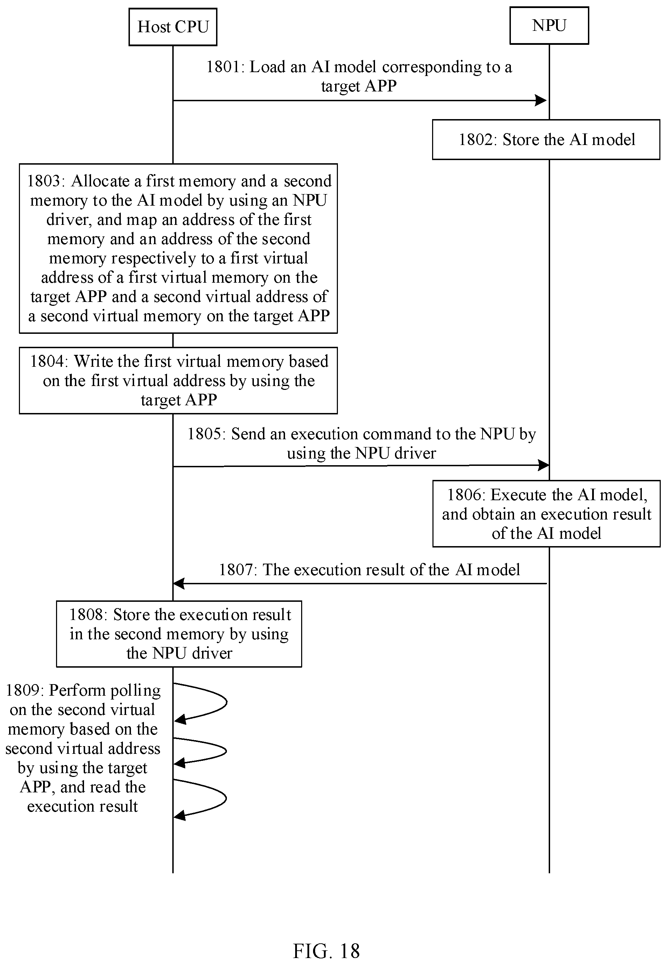

It should be noted that, in the embodiments corresponding to FIG. 14 to FIG. 16, one memory on the NPU driver is allocated to one loaded AI model. In some implementations of this application, alternatively, two memories on the NPU driver may be allocated to one loaded AI model, where one memory is used for a command path, and the other memory is used for a response path. For details, refer to FIG. 18. FIG. 18 is another flowchart of a method for data exchange between a host CPU and an NPU according to an embodiment of this application. The method may include the following steps.

1801: The host CPU loads an AI model corresponding to the target APP to the NPU.

1802: The NPU stores the AI model.

Step 1801 and step 1802 are similar to step 1401 and step 1402 in the embodiment corresponding to FIG. 14. For a specific process, refer to FIG. 14. Details are not described herein again.

1803: The host CPU allocates a first memory and a second memory to the AI model by using the NPU driver, and maps an address of the first memory and an address of the second memory respectively to a first virtual address of a first virtual memory on the target APP and a second virtual address of a second virtual memory on the target APP.

After loading the AI model to the NPU, the host CPU further allocates two memories (both the two memories are memories allocated on the NPU driver) to the AI model by using the NPU driver, and maps the addresses of the two memories respectively to the first virtual address of the first virtual memory on the target APP and the second virtual address of the second virtual memory on the target APP. In this way, the two memories on the NPU driver are correspondingly allocated to the AI model loaded to the NPU, and the addresses of the two memories are further mapped to the virtual addresses of the two virtual memories on the target APP. If there are a plurality of AI models (for example, four AI models, which may be corresponding to a same APP or different APPs) loaded to the NPU, two memories on the NPU driver are allocated to each AI model (for example, eight memories are allocated in total), and addresses of the memories are mapped to virtual addresses (for example, mapped to eight different virtual addresses in total) of different virtual memories on their respective APPs in a same manner.

1804: The host CPU writes the first virtual memory based on the first virtual address by using the target APP.

With the first virtual address that is on the target APP and that is corresponding to the first memory on the NPU driver, the host CPU may write the first virtual memory based on the first virtual address by using the target APP. Writing the first virtual memory by using the target APP essentially means writing the corresponding first memory on the NPU driver, and then data in the first memory on the NPU driver is modified.

1805: The host CPU sends an execution command to the NPU by using the NPU driver.

1806: The NPU executes the AI model, and obtains an execution result of the AI model.

1807: The NPU sends the execution result of the AI model to the host CPU.

Step 1805 to step 1807 are similar to step 1405 to step 1407 in the embodiment corresponding to FIG. 14. For a specific process, refer to FIG. 14. Details are not described herein again.

1808: The host CPU stores the execution result in the second memory by using the NPU driver.

The host CPU receives, by using the NPU driver, the execution result sent by the NPU, and then stores the execution result in the second memory by using the NPU driver.

1809: The host CPU performs polling on the second virtual memory based on the second virtual address by using the target APP, and reads the execution result.

Finally, that the host CPU may read data of the second virtual memory in a polling mode based on the second virtual address by using the target APP essentially means reading corresponding data of the second memory on the NPU driver in a polling mode. After a previous round ends and before a current round starts, if the execution result of the AI model is written into the second memory, the execution result of the AI model can be read in the current round of polling.

It should be noted that, in this implementation of this application, step 1809 is performed after steps 1806 to 1808. Alternatively, step 1809 may be performed before steps 1806 to 1808, or may be performed between any two of steps 1806 to 1808. This is not specifically limited herein.

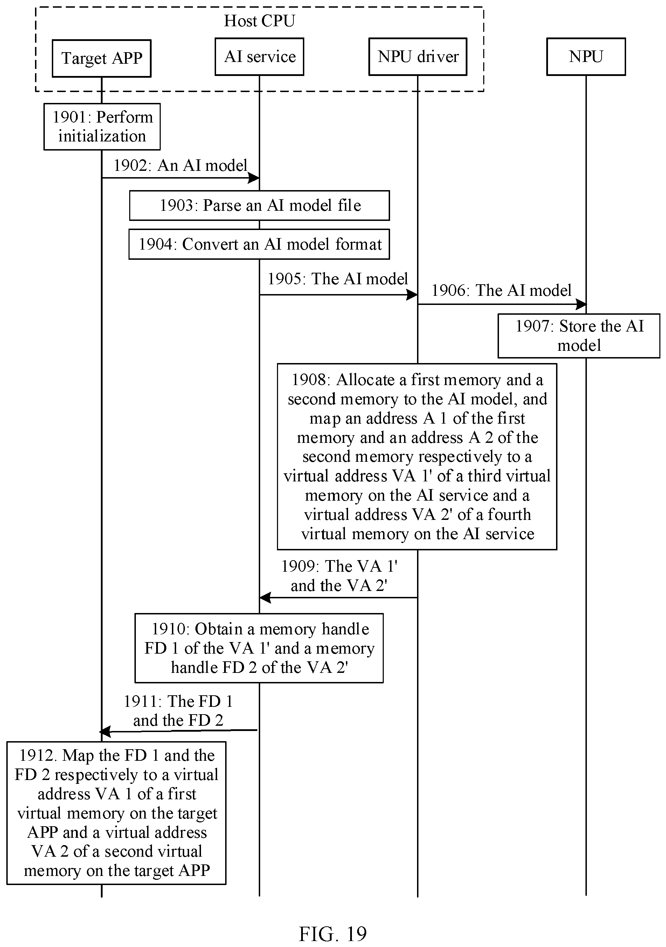

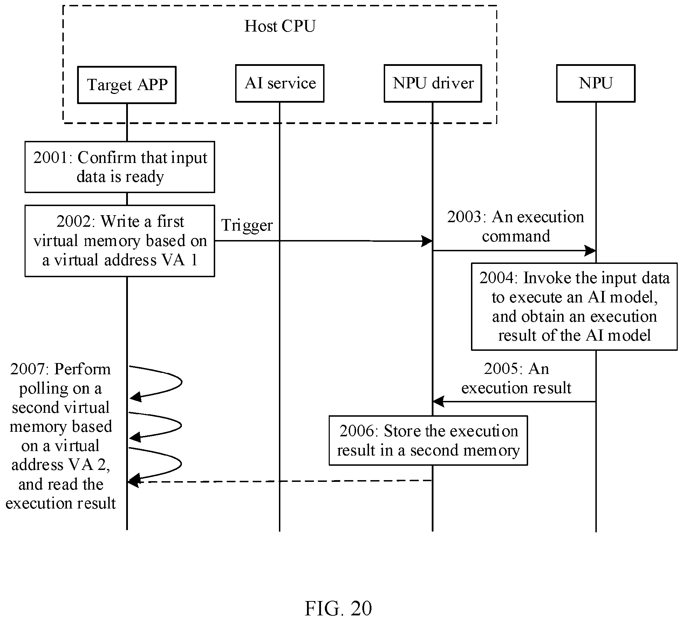

Similarly, for ease of understanding, the following divides the implementation corresponding to FIG. 18 into two parts, which are separately described. The first part is corresponding to step 1801 to step 1803, and specifically describes how the addresses of the two memories on the NPU driver are mapped to the virtual addresses of the two virtual memories on the target APP. For the first part, refer to FIG. 19. The second part is corresponding to step 1804 to step 1809, and specifically describes an execution command process and an execution result response process of AI model inference. For the second part, refer to FIG. 20.

FIG. 19 is a flowchart of mapping addresses of two memories on an NPU to virtual addresses of two virtual memories on a target APP. The procedure may include the following steps.

1901: Initialize a target APP.

1902: The target APP sends an AI model to the AI service.

1903: The AI service parses an AI model file.

1904: The AI service converts an AI model format.

1905: The AI service sends the AI model to the NPU driver.

1906: The NPU driver sends the AI model to the NPU.

1907: The NPU stores the AI model.

Step 1901 to step 1907 are similar to step 1501 to step 1507 in the embodiment corresponding to FIG. 15. For a specific process, refer to FIG. 15. Details are not described herein again.

1908: The NPU driver allocates a first memory and a second memory to the AI model, and maps an address A 1 of the first memory and an address A 2 of the second memory respectively to a virtual address VA 1' of a third virtual memory on the AI service and a virtual address VA 2' of a fourth virtual memory on the AI service.

After the AI model is loaded to the NPU, the NPU driver allocates two memories, that is, the first memory and the second memory, to the AI model, where both the two memories are memories allocated on the NPU driver; and separately maps the addresses A 1 and A 2 of the two memories to virtual memory space of the AI service, to obtain the virtual address VA 1' of the third virtual memory on the AI service and the virtual address VA 2' of the fourth virtual memory on the AI service.

1909: The NPU driver sends VA 1' and VA 2' to the AI service.

1910: The AI service obtains a memory handle FD 1 of VA 1' and a memory handle FD 2 of VA 2'.

1911: The AI service sends FD 1 and FD 2 to the target APP.

1912: The target APP maps FD 1 and FD 2 respectively to a virtual address VA 1 of a first virtual memory on the target APP and a virtual address VA 2 of a second virtual memory on the target APP.

Step 1909 to step 1912 are similar to step 1010 to step 1013 in the embodiment corresponding to FIG. 10. For a specific process, refer to FIG. 10. Details are not described herein again.

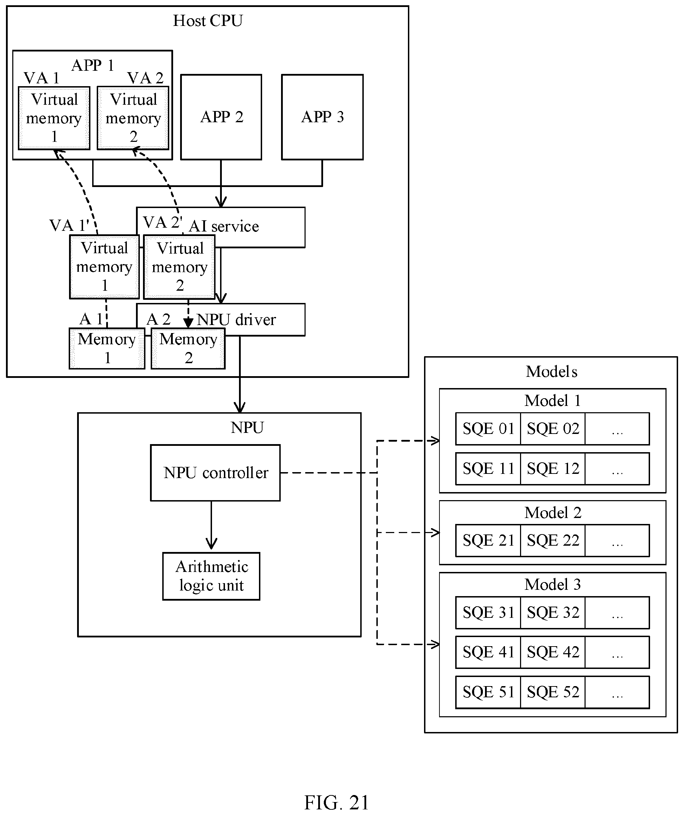

In conclusion, it can be learned from the implementation corresponding to FIG. 19 that, after the AI model is loaded to the NPU, the NPU driver allocates two memories located on the NPU driver, namely, the first memory and the second memory, to the AI model, and maps the addresses of the two memories respectively to the virtual addresses of the two virtual memories on the target APP. Actually, the target APP may directly read one memory and write the other memory. This means that two direct connection paths exist between the target APP and the NPU driver. In this way, time overheads of a computing path between the host CPU and the NPU are reduced without modifying the chip NPU. As shown in FIG. 21, that the target APP is an APP 1 is used as an example, to vividly illustrate a schematic diagram of mapping the addresses A 1 and A 2 of the two memories on the NPU driver respectively to the virtual addresses VA 1 and VA 2 of the two virtual memories on the APP 1 in the embodiment corresponding to FIG. 19. A 1 and VA 1 are used to implement an execution command process (namely, a command path) of AI model inference, and A 2 and VA 2 are used to implement an execution result response process (namely, a response path) of the AI model inference.

Next, FIG. 20 is a flowchart of an execution command process and an execution result response process of AI model inference. The AI model inference may include the following steps.

2001: The target APP confirms that input data is ready.

2002: The target APP writes the virtual memory (that is, writes VA 1) based on the virtual address VA 1.

Step 2001 and step 2002 are similar to step 1101 and step 1102 in the embodiment corresponding to FIG. 11. For a specific process, refer to FIG. 11. Details are not described herein again.

2003: The NPU driver sends an execution command to the NPU.

2004: The NPU invokes the input data to execute the AI model, and obtains an execution result of the AI model. 2005: The NPU sends the execution result to the NPU driver.

Step 2003 to step 2005 are similar to step 1603 to step 1605 in the embodiment corresponding to FIG. 16. For a specific process, refer to FIG. 16. Details are not described herein again.

2006: The NPU driver stores the execution result in the second memory

2007: The target APP performs polling on the virtual memory based on the virtual address VA 2, and reads the execution result (that is, reads VA 2).

Step 2007 is similar to step 1105 in the embodiment corresponding to FIG. 11. For a specific process, refer to FIG. 11. Details are not described herein again.

Similarly, it should be noted that, in this implementation of this application, step 2007 is performed after steps 2004 to 2006. Alternatively, step 2007 may be performed before steps 2004 to 2006, or may be performed between any two of steps 2004 to 2006. This is not specifically limited herein.

In conclusion, it can be learned from the implementation corresponding to FIG. 20 that, in comparison with an existing solution (as shown in FIG. 2), in an AI model inference process in this implementation, inter-process time overheads caused between the target APP and the AI service and time overheads caused when the NPU driver is switched from a user mode to a kernel mode are reduced. Compared with the embodiment corresponding to FIG. 11 in this application, time overheads caused between the NPU driver and the NPU controller are not reduced, but an advantage of this implementation lies in that a structure of the NPU does not need to be modified. In other words, AI model execution efficiency can be improved without modifying a chip structure. In addition, different computing paths use different registers. The process is easy to operate, and it is not prone to confuse the information.

It should be noted that, in some implementations of this application, in a case in which the chip cannot be modified, a memory may be allocated on the NPU driver to simulate a function of a register on the NPU, as shown in the embodiments corresponding to the FIG. 14 to FIG. 21; or based on the computing device shown in FIG. 13, a memory may be allocated on the NPU controller to simulate a function of a register on the NPU. This achieves an effect similar to those in FIG. 14 to FIG. 21, and a specific implementation process thereof is similar to those in FIG. 14 to FIG. 21. Details are not described herein again.

The computing device provided in the embodiments of this application or the method for data exchange between a host CPU and an NPU that are implemented based on the computing device can be used in the fields of intelligent security protection, automated driving, intelligent terminal, and the like. For example, in the field of automated driving, the computing device or the method for data exchange are used in some common tasks in application scenarios such as driver monitoring, parking, and automated driving: obstacle recognition, lane line detection, semantic segmentation, and target detection. In view of this, the following describes a plurality of application scenarios related to the products.

### (1) Automated driving

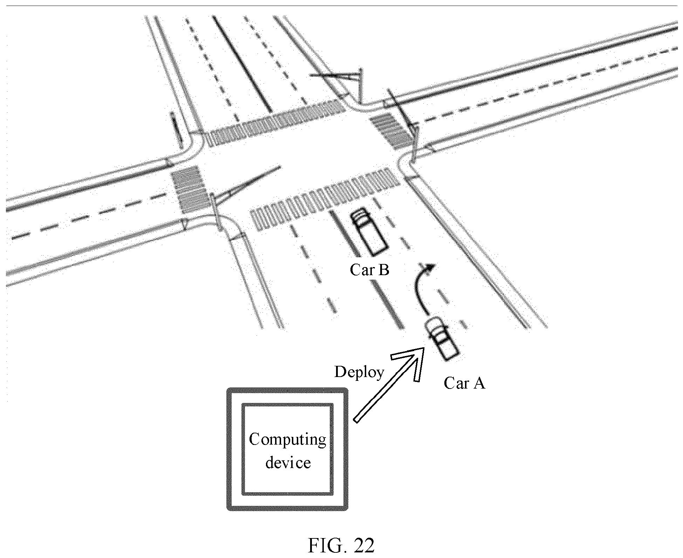

AI model inference needs to be used in a large quantity of scenarios of an automated driving system. Most AI models are deep neural networks. A neural network is matrix-vector computationally intensive, and requires quite high computing power (a magnitude T). Generally, a common CPU cannot satisfy a computing power requirement of a deep neural network, that is, cannot satisfy a computing power requirement of massive computing of an AI model. Therefore, a dedicated accelerator (such as an NPU) needs to be used to execute the AI model. The computing device provided in the embodiments of this application can be used in an automated driving system. An automated driving scenario has a quite high requirement on real-time quality of AI model inference execution. For example, each camera shoots 30 frames of images per second, and each image may need to be processed for a plurality of times, and images shot by a plurality of cameras need to be processed for each car. Therefore, it is required that a time for each AI model inference should be as short as possible. It is required that computing power of the NPU should satisfy the requirement, so that images can be processed quickly. In addition, it is also required that a round trip time of a computing path between an APP on a host CPU and the NPU should be short enough. The computing device provided in the embodiments of this application implements pass-through of an execution command and response of an AI inference between the APP and the NPU, to reduce time overheads of the computing path between the APP and the NPU during AI inference, thereby improving AI model inference efficiency. The following uses an example for description. As shown in FIG. 22, when a speed of a car A on which the computing device provided in the embodiments of this application is deployed is high, a camera determines, through shooting, that a distance between the car A and a car B in front of the car A is excessively close. Because real-time quality of AI model inference is high, the car A can obtain an AI model inference result in time, and control the car A to quickly turn to a right lane based on the inference result, to avoid colliding with the car B.

### (2) Object detection of a mobile terminal

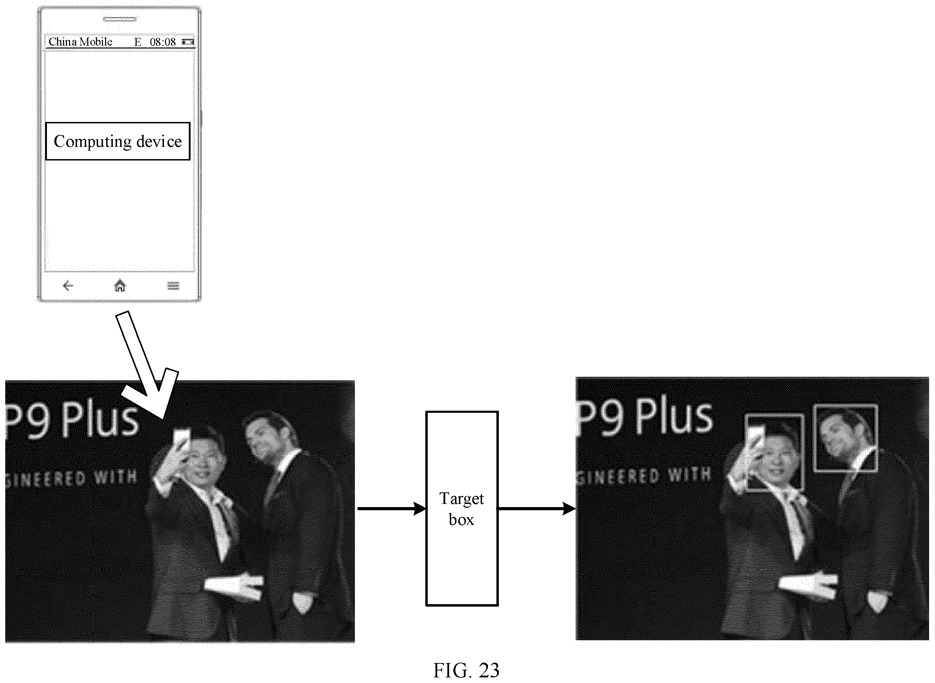

Using a terminal being a mobile phone as an example, object detection on the mobile phone side is a target detection issue. When a user uses a mobile phone to take a photo, automatically capturing targets such as a face and an animal can help the mobile phone perform autofocus, beautification, and the like. A shorter response time for automatically capturing the face and the animal indicates better user experience. As shown in FIG. 23, the computing device provided in the embodiments of this application may be deployed in a mobile phone, so that the mobile phone can execute a target detection task more smoothly. Smoothness can provide better user experience for a user, thereby improving product quality of the mobile phone.

### (3) Facial recognition

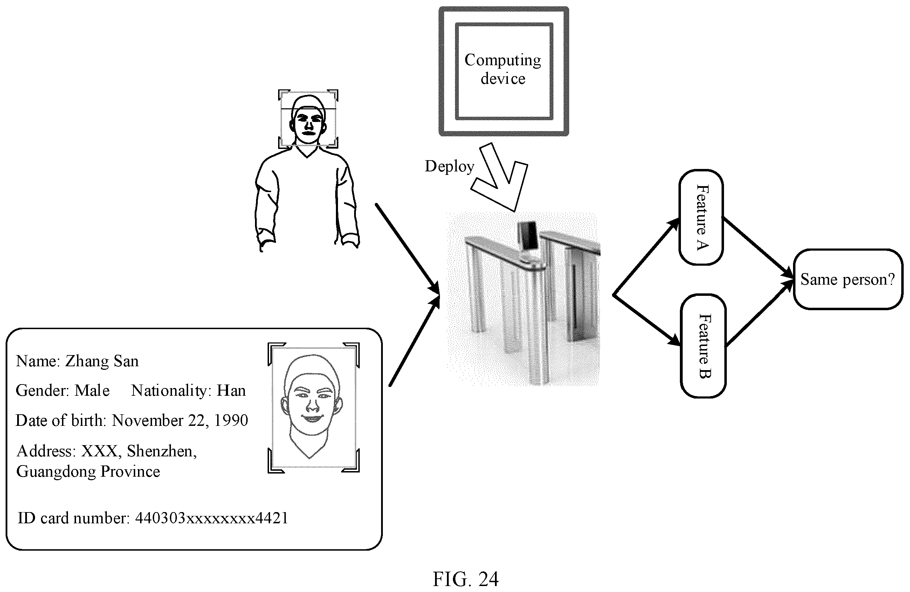

The computing device provided in the embodiments of this application may alternatively be deployed in a machine used for facial recognition, for example, an entrance gate used for face authentication. For details, refer to FIG. 24. Facial recognition is an issue on image similarity comparison. When a passenger performs face authentication at a high-speed railway or airport entrance gate, a camera captures a face image. An AI model is used to extract a feature, and calculate a similarity between the extracted feature and an image feature of an identification card stored in a system. If the similarity is high, the authentication succeeds. The entrance gate on which the computing device provided in the embodiments of this application is deployed can efficiently perform face authentication, thereby improving recognition efficiency.

It should be noted that the computing device in this application can be used in the application scenarios described in FIG. 22 to FIG. 24, and can be used in subdivision fields of the artificial intelligence field, provided that the computing device can be used in a specific field. No example is provided for description herein.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a training device, a network device, or the like) to perform the methods described in the embodiments of this application. All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, all or some of the procedures or the functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a training device or a data center, integrating one or more usable media. The usable medium may be a magnetic medium (for example, a floppy disk, a hard disk, or a magnetic tape), an optical medium (for example, a digital video disc, DVD), a semiconductor medium (for example, a solid state disk (solid state disk, SSD)), or the like.

## Claims

1. A computing device, wherein the computing device comprises a host CPU and an NPU, a target application **'APP'** runs on the host CPU, the host CPU comprises an AI service (AI Service) and an NPU driver, the NPU comprises an NPU controller, an arithmetic logic unit, and N registers, and N≥1;
the host CPU is configured to load an AI model corresponding to the target APP to the NPU by using the AI service and the NPU driver;
the NPU is configured to: allocate a first register to the AI model by using the NPU controller, and send a physical address of the first register to the host CPU by using the NPU controller, wherein the first register belongs to the N registers;
the host CPU is further configured to: receive the physical address sent by the NPU, and map the physical address to a first virtual address of a first virtual memory on the target APP;
the host CPU is further configured to write the first virtual memory based on the first virtual address by using the target APP;
the NPU is further configured to: when the host CPU writes the first virtual memory based on the first virtual address by using the target APP, control, by using the NPU controller, the arithmetic logic unit to execute the AI model;
the NPU is further configured to write an execution result of the AI model into the first register by using the NPU controller; and
the host CPU is further configured to: perform polling on the first virtual memory based on the first virtual address by using the target APP, and read the execution result of the AI model from the first register.

2. The device according to claim 1, wherein the host CPU is specifically configured to:
receive, by using the NPU driver, the physical address sent by the NPU controller, and map the physical address to virtual memory space of the AI service by using the NPU driver, to obtain a second virtual address of a second virtual memory on the AI service; and
map the second virtual address to virtual memory space of the target APP by using the AI service, to obtain the first virtual address of the first virtual memory on the target APP.

3. The device according to claim 2, wherein the host CPU is further specifically configured to:
receive, by using the target APP, a memory handle that is of the second virtual address and that is sent by the AI service; and
map the memory handle of the second virtual address to the first virtual address of the first virtual memory on the target APP by using the target APP.

4. The device according to claim 1, wherein the host CPU is specifically configured to:
receive, by using the NPU driver, the physical address of the first register sent by the NPU controller; and
map the physical address of the first register directly to virtual memory space of the target APP by using the NPU driver, to obtain the first virtual address of the first virtual memory on the target APP.

5. The device according to any one of claims 1 to 4, wherein the NPU is specifically configured to:
send the physical address of the first register to the NPU driver of the host CPU.

6. A computing device, wherein the computing device comprises a host CPU and an NPU, a target application 'APP' runs on the host CPU, the host CPU comprises an AI service (AI Service) and an NPU driver, the NPU comprises an NPU controller, an arithmetic logic unit, and N registers, and N≥2;
the host CPU is configured to load an AI model corresponding to the target APP to the NPU by using the AI service and the NPU driver;
the NPU is configured to: allocate a first register and a second register to the AI model by using the NPU controller, and send a first physical address of the first register and a second physical address of the second register to the host CPU by using the NPU controller, wherein the first register and the second register belong to the N registers;
the host CPU is further configured to: receive the first physical address and the second physical address that are sent by the NPU, and map the first physical address and the second physical address respectively to a first virtual address of a first virtual memory on the target APP and a second virtual address of a second virtual memory on the target APP;
the host CPU is further configured to write the first virtual memory based on the first virtual address by using the target APP;
the NPU is further configured to: when the host CPU writes the first virtual memory based on the first virtual address by using the target APP, control, by using the NPU controller, the arithmetic logic unit to execute the AI model;
the NPU is further configured to write an execution result of the AI model into the second register by using the NPU controller; and
the host CPU is further configured to: perform polling on the second virtual memory based on the second virtual address by using the target APP, and read the execution result of the AI model from the second register.

7. A method for data exchange between a host CPU and an NPU, wherein the method is applied to a computing device, the computing device comprises a host CPU and an NPU, a target application 'APP' runs on the host CPU, the host CPU comprises an AI service (AI Service) and an NPU driver, the NPU comprises an NPU controller, an arithmetic logic unit, and N registers, and N≥1; and the method comprises:
loading, by the host CPU, an AI model corresponding to the target APP to the NPU by using the AI service and the NPU driver;
allocating, by the NPU, a first register to the AI model by using the NPU controller, and sending a physical address of the first register to the host CPU by using the NPU controller, wherein the first register belongs to the N registers;
receiving, by the host CPU, the physical address sent by the NPU, and mapping the physical address to a first virtual address of a first virtual memory on the target APP;
when the host CPU writes the first virtual memory based on the first virtual address by using the target APP, triggering the NPU controller to control the arithmetic logic unit to execute the AI model, and writing an execution result of the AI model into the first register by using the NPU controller; and
performing, by the host CPU, polling on the first virtual memory based on the first virtual address by using the target APP, and reading the execution result of the AI model from the first register.

8. A method for data exchange between a host CPU and an NPU, wherein the method is applied to a computing device, the computing device comprises a host CPU and an NPU, a target application 'APP' runs on the host CPU, the host CPU comprises an AI service (AI Service) and an NPU driver, the NPU comprises an NPU controller, an arithmetic logic unit, and N registers, and N≥2; and the method comprises:
loading, by the host CPU, an AI model corresponding to the target APP to the NPU by using the AI service and the NPU driver;
allocating, by the NPU, a first register and a second register to the AI model by using the NPU controller, and sending a first physical address of the first register and a second physical address of the second register to the host CPU by using the NPU controller, so that the host CPU maps the first physical address and the second physical address respectively to a first virtual address of a first virtual memory on the target APP and a second virtual address of a second virtual memory on the target APP, wherein the first register belongs to the N registers,
receiving, by the host CPU, the first physical address and the second physical address that are sent by the NPU, and mapping the first physical address and the second physical address respectively to the first virtual address of the first virtual memory on the target APP and the second virtual address of the second virtual memory on the target APP;
when the host CPU writes the first virtual memory based on the first virtual address by using the target APP, triggering the NPU controller to control the arithmetic logic unit to execute the AI model, and writing an execution result of the AI model into the second register by using the NPU controller; and
performing, by the host CPU, polling on the second virtual memory based on the second virtual address by using the target APP, and reading the execution result of the AI model from the second register.

9. A chip system, wherein the chip system implements a computing device according to any one of claims 1 to 6, wherein the chip system is configured to run a computer program or instructions, so that the method according to any one of claims 7 or 8 is performed, with N being greater than 1 or 2 respectively.

## Patentansprüche

1. Computervorrichtung, wobei die Computervorrichtung eine Host-CPU und eine NPU umfasst, wobei eine Zielanwendung "Ziel-APP" in der Host-CPU ausgeführt wird, wobei die Host-CPU einen KI-Dienst (KI-Dienst) und einen NPU-Treiber umfasst, wobei die NPU eine NPU-Steuereinheit, eine arithmetische Logikeinheit und N Register umfasst und wobei N≥1 ist;
wobei die Host-CPU konfiguriert ist, um ein KI-Modell, das der Ziel-APP entspricht, in die NPU zu laden, indem der KI-Dienst und der NPU-Treiber verwendet werden;
wobei die NPU konfiguriert ist zum: Zuweisen eines ersten Registers zu dem KI-Modell, indem die NPU-Steuereinheit verwendet wird, und Senden einer physischen Adresse des ersten Registers an die Host-CPU, indem die NPU-Steuereinheit verwendet wird, wobei das erste Register zu den N Registern gehört;
wobei die Host-CPU ferner konfiguriert ist zum: Empfangen der physischen Adresse, die von der NPU gesendet wird, und Zuordnen der physischen Adresse zu einer ersten virtuellen Adresse eines ersten virtuellen Speichers in der Ziel-APP;
wobei die Host-CPU ferner konfiguriert ist, um basierend auf der ersten virtuellen Adresse in den ersten virtuellen Speicher zu schreiben, indem die Ziel-APP verwendet wird;
wobei die NPU ferner konfiguriert ist zum: wenn die Host-CPU basierend auf der ersten virtuellen Adresse in den ersten virtuellen Speicher schreibt, indem die Ziel-APP verwendet wird, Steuern der arithmetischen Logikeinheit, um das KI-Modell auszuführen, indem die NPU-Steuereinheit verwendet wird;
wobei die NPU ferner konfiguriert ist, um ein Ausführungsergebnis des KI-Modells in das erste Register zu schreiben, indem die NPU-Steuereinheit verwendet wird; und
wobei die Host-CPU ferner konfiguriert ist zum: Durchführen eines Abfragens in dem ersten virtuellen Speicher basierend auf der ersten virtuellen Adresse, indem die Ziel-APP verwendet wird, und Lesen des Ausführungsergebnisses des KI-Modells aus dem ersten Register.

2. Vorrichtung nach Anspruch 1, wobei die Host-CPU insbesondere konfiguriert ist zum:
Empfangen, indem der NPU-Treiber verwendet wird, der physischen Adresse, die von der NPU-Steuereinheit gesendet wird, und Zuordnen der physischen Adresse zu einem virtuellen Speicherraum des KI-Dienstes, indem der NPU-Treiber verwendet wird, um eine zweite virtuelle Adresse eines zweiten virtuellen Speichers in dem KI-Dienst zu erhalten; und
Zuordnen der zweiten virtuellen Adresse zu einem virtuellen Speicherraum der Ziel-APP, indem der KI-Dienst verwendet wird, um die erste virtuelle Adresse des ersten virtuellen Speichers in der Ziel-APP zu erhalten.

3. Vorrichtung nach Anspruch 2, wobei die Host-CPU ferner insbesondere konfiguriert ist zum:
Empfangen, indem die Ziel-APP verwendet wird, eines Speicherzeigers, der von der zweiten virtuellen Adresse stammt und der von dem KI-Dienst gesendet wird; und
Zuordnen des Speicherzeigers der zweiten virtuellen Adresse zu der ersten virtuellen Adresse des ersten virtuellen Speichers in der Ziel-APP, indem die Ziel-APP verwendet wird.

4. Vorrichtung nach Anspruch 1, wobei die Host-CPU insbesondere konfiguriert ist zum:
Empfangen, indem der NPU-Treiber verwendet wird, der physischen Adresse des ersten Registers, die von der NPU-Steuereinheit gesendet wird; und
Zuordnen der physischen Adresse des ersten Registers direkt zu einem virtuellen Speicherraum der Ziel-APP, indem der NPU-Treiber verwendet wird, um die erste virtuelle Adresse des ersten virtuellen Speichers in der Ziel-APP zu erhalten.

5. Vorrichtung nach einem der Ansprüche 1 bis 4, wobei die NPU insbesondere konfiguriert ist zum:
Senden der physischen Adresse des ersten Registers an den NPU-Treiber der Host-CPU.

6. Computervorrichtung, wobei die Computervorrichtung eine Host-CPU und eine NPU umfasst, wobei eine Zielanwendung "Ziel-APP" in der Host-CPU ausgeführt wird, wobei die Host-CPU einen KI-Dienst (KI-Dienst) und einen NPU-Treiber umfasst, wobei die NPU eine NPU-Steuereinheit, eine arithmetische Logikeinheit und N Register umfasst und wobei N≥2 ist;
wobei die Host-CPU konfiguriert ist, um ein KI-Modell, das der Ziel-APP entspricht, in die NPU zu laden, indem der KI-Dienst und der NPU-Treiber verwendet werden;
wobei die NPU konfiguriert ist zum: Zuweisen eines ersten Registers und eines zweiten Registers zu dem KI-Modell, indem die NPU-Steuereinheit verwendet wird, und Senden einer ersten physischen Adresse des ersten Registers und einer zweiten physischen Adresse des zweiten Registers an die Host-CPU, indem die NPU-Steuereinheit verwendet wird, wobei das erste Register und das zweite Register zu den N Registern gehören;
wobei die Host-CPU ferner konfiguriert ist zum: Empfangen der ersten physischen Adresse und der zweiten physischen Adresse, die von der NPU gesendet werden, und Zuordnen der ersten physischen Adresse und der zweiten physischen Adresse zu einer ersten virtuellen Adresse eines ersten virtuellen Speichers in der Ziel-APP bzw. zu einer zweiten virtuellen Adresse eines zweiten virtuellen Speichers in der Ziel-APP;
wobei die Host-CPU ferner konfiguriert ist, um basierend auf der ersten virtuellen Adresse in den ersten virtuellen Speicher zu schreiben, indem die Ziel-APP verwendet wird;
wobei die NPU ferner konfiguriert ist zum: wenn die Host-CPU basierend auf der ersten virtuellen Adresse in den ersten virtuellen Speicher schreibt, indem die Ziel-APP verwendet wird, Steuern der arithmetischen Logikeinheit, um das KI-Modell auszuführen, indem die NPU-Steuereinheit verwendet wird;
wobei die NPU ferner konfiguriert ist, um ein Ausführungsergebnis des KI-Modells in das zweite Register zu schreiben, indem die NPU-Steuereinheit verwendet wird; und
wobei die Host-CPU ferner konfiguriert ist zum: Durchführen eines Abfragens in dem zweiten virtuellen Speicher basierend auf der zweiten virtuellen Adresse, indem die Ziel-APP verwendet wird, und Lesen des Ausführungsergebnisses des KI-Modells aus dem zweiten Register.

7. Verfahren für einen Datenaustausch zwischen einer Host-CPU und einer NPU, wobei das Verfahren in einer Computervorrichtung angewandt wird, wobei die Computervorrichtung eine Host-CPU und eine NPU umfasst, wobei eine Zielanwendung "Ziel-APP" in der Host-CPU ausgeführt wird, wobei die Host-CPU einen KI-Dienst (KI-Dienst) und einen NPU-Treiber umfasst, wobei die NPU eine NPU-Steuereinheit, eine arithmetische Logikeinheit und N Register umfasst und wobei N≥1 ist; und wobei das Verfahren umfasst:
Laden, durch die Host-CPU, eines KI-Modells, das der Ziel-APP entspricht, in die NPU, indem der KI-Dienst und der NPU-Treiber verwendet werden;
Zuweisen, durch die NPU, eines ersten Registers zu dem KI-Modell, indem die NPU-Steuereinheit verwendet wird, und Senden einer physischen Adresse des ersten Registers an die Host-CPU, indem die NPU-Steuereinheit verwendet wird, wobei das erste Register zu den N Registern gehört;
Empfangen, durch die Host-CPU, der physischen Adresse, die von der NPU gesendet wird, und Zuordnen der physischen Adresse zu einer ersten virtuellen Adresse eines ersten virtuellen Speichers in der Ziel-APP;
wenn die Host-CPU basierend auf der ersten virtuellen Adresse in den ersten virtuellen Speicher schreibt, indem die Ziel-APP verwendet wird, Triggern der NPU-Steuereinheit zum Steuern der arithmetischen Logikeinheit, um das KI-Modell auszuführen, und Schreiben eines Ausführungsergebnisses des KI-Modells in das erste Register, indem die NPU-Steuereinheit verwendet wird; und
Durchführen, durch die Host-CPU, eines Abfragens in dem ersten virtuellen Speicher basierend auf der ersten virtuellen Adresse, indem die Ziel-APP verwendet wird, und Lesen des Ausführungsergebnisses des KI-Modells aus dem ersten Register.

8. Verfahren für einen Datenaustausch zwischen einer Host-CPU und einer NPU, wobei das Verfahren in einer Computervorrichtung angewandt wird, wobei die Computervorrichtung eine Host-CPU und eine NPU umfasst, wobei eine Zielanwendung "Ziel-APP" in der Host-CPU ausgeführt wird, wobei die Host-CPU einen KI-Dienst (KI-Dienst) und einen NPU-Treiber umfasst, wobei die NPU eine NPU-Steuereinheit, eine arithmetische Logikeinheit und N Register umfasst und wobei N≥2 ist; und wobei das Verfahren umfasst:
Laden, durch die Host-CPU, eines KI-Modells, das der Ziel-APP entspricht, in die NPU, indem der KI-Dienst und der NPU-Treiber verwendet werden;
Zuweisen, durch die NPU, eines ersten Registers und eines zweiten Registers zu dem KI-Modell, indem die NPU-Steuereinheit verwendet wird, und Senden einer ersten physischen Adresse des ersten Registers und einer zweiten physischen Adresse des zweiten Registers an die Host-CPU, indem die NPU-Steuereinheit verwendet wird, sodass die Host-CPU die erste physische Adresse und die zweite physische Adresse zu einer ersten virtuellen Adresse eines ersten virtuellen Speichers in der Ziel-APP bzw. zu einer zweiten virtuellen Adresse eines zweiten virtuellen Speichers in der Ziel-APP zuordnet, wobei das erste Register zu den N Registern gehört;
Empfangen, durch die Host-CPU, der ersten physischen Adresse und der zweiten physischen Adresse, die von der NPU gesendet werden, und Zuordnen der ersten physischen Adresse und der zweiten physischen Adresse zu einer ersten virtuellen Adresse eines ersten virtuellen Speichers in der Ziel-APP bzw. zu einer zweiten virtuellen Adresse eines zweiten virtuellen Speichers in der Ziel-APP;
wenn die Host-CPU basierend auf der ersten virtuellen Adresse in den ersten virtuellen Speicher schreibt, indem die Ziel-APP verwendet wird, Triggern der NPU-Steuereinheit zum Steuern der arithmetischen Logikeinheit, um das KI-Modell auszuführen, und Schreiben eines Ausführungsergebnisses des KI-Modells in das zweite Register, indem die NPU-Steuereinheit verwendet wird; und
Durchführen, durch die Host-CPU, eines Abfragens in dem zweiten virtuellen Speicher basierend auf der zweiten virtuellen Adresse, indem die Ziel-APP verwendet wird, und Lesen des Ausführungsergebnisses des KI-Modells aus dem zweiten Register.

9. Chipsystem, wobei das Chipsystem eine Computervorrichtung nach einem der Ansprüche 1 bis 6 implementiert, wobei das Chipsystem konfiguriert ist, um ein Computerprogramm oder Anweisungen auszuführen, sodass das Verfahren nach einem der Ansprüche 7 oder 8 durchgeführt wird, wobei N größer als 1 bzw. 2 ist.

## Revendications

1. Dispositif informatique, le dispositif informatique comprenant une CPU hôte et une NPU, une application cible, APP, s'exécutant sur la CPU hôte, la CPU hôte comprenant un service AI (Service AI) et un pilote NPU, la NPU comprenant un contrôleur NPU, une unité arithmétique logique, et N registres, et N ≥ 1 ;
la CPU hôte étant configurée pour charger un modèle AI correspondant à l'APP cible sur la NPU en utilisant le service AI et le pilote NPU ;
la NPU étant configurée pour : allouer un premier registre au modèle AI en utilisant le contrôleur NPU, et envoyer une adresse physique du premier registre à la CPU hôte en utilisant le contrôleur NPU, où le premier registre appartient aux N registres ;
la CPU hôte est en outre configurée pour : recevoir l'adresse physique envoyée par la NPU, et mettre en correspondance l'adresse physique avec une première adresse virtuelle d'une première mémoire virtuelle sur l'APP cible ;
la CPU hôte est en outre configurée pour écrire dans la première mémoire virtuelle sur la base de la première adresse virtuelle en utilisant l'APP cible ;
la NPU est en outre configurée pour : lorsque la CPU hôte écrit dans la première mémoire virtuelle sur la base de la première adresse virtuelle à l'aide de l'APP cible, contrôler, à l'aide du contrôleur NPU, l'unité logique arithmétique pour exécuter le modèle AI ;
la NPU est en outre configurée pour écrire un résultat d'exécution du modèle AI dans le premier registre à l'aide du contrôleur NPU ; et
la CPU hôte est en outre configurée pour : effectuer une interrogation sur la première mémoire virtuelle sur la base de la première adresse virtuelle en utilisant l'APP cible, et lire le résultat d'exécution du modèle AI à partir du premier registre.

2. Dispositif selon la revendication 1, dans lequel la CPU hôte est spécifiquement configurée pour :
recevoir, à l'aide du pilote NPU, l'adresse physique envoyée par le contrôleur NPU, et mettre en correspondance l'adresse physique avec l'espace mémoire virtuel du service AI à l'aide du pilote NPU, pour obtenir une deuxième adresse virtuelle d'une deuxième mémoire virtuelle sur le service AI ; et
mettre en correspondance la deuxième adresse virtuelle avec l'espace mémoire virtuel de l'APP cible en utilisant le service AI, pour obtenir la première adresse virtuelle de la première mémoire virtuelle sur l'APP cible.

3. Dispositif selon la revendication 2, dans lequel la CPU hôte est en outre spécifiquement configurée pour :
recevoir, à l'aide de l'APP cible, un descripteur de mémoire de la deuxième adresse virtuelle et qui est envoyé par le service AI ; et
mettre en correspondance le descripteur de mémoire de la deuxième adresse virtuelle avec la première adresse virtuelle de la première mémoire virtuelle sur l'APP cible à l'aide de l'APP cible.

4. Dispositif selon la revendication 1, dans lequel la CPU hôte est spécifiquement configurée pour :
recevoir, à l'aide du pilote NPU, l'adresse physique du premier registre envoyé par le contrôleur NPU ; et
mettre en correspondance l'adresse physique du premier registre directement avec l'espace mémoire virtuel de l'APP cible à l'aide du pilote NPU, afin d'obtenir la première adresse virtuelle de la première mémoire virtuelle sur l'APP cible.

5. Dispositif selon l'une quelconque des revendications 1 à 4, dans lequel la NPU est spécifiquement configurée pour :
envoyer l'adresse physique du premier registre au pilote NPU de la CPU hôte.

6. Dispositif informatique, le dispositif informatique comprenant une CPU hôte et une NPU, une application cible, APP, s'exécutant sur la CPU hôte, la CPU hôte comprenant un service AI (Service AI) et un pilote NPU, la NPU comprenant un contrôleur NPU, une unité arithmétique logique, et N registres, et N ≥ 2 ;
la CPU hôte étant configurée pour charger un modèle AI correspondant à l'APP cible sur la NPU en utilisant le service AI et le pilote NPU ;
la NPU est configurée pour : allouer un premier registre et un deuxième registre au modèle AI en utilisant le contrôleur NPU, et envoyer une première adresse physique du premier registre et une deuxième adresse physique du deuxième registre à la CPU hôte en utilisant le contrôleur NPU, le premier registre et le deuxième registre appartenant aux N registres ;
la CPU hôte est en outre configurée pour : recevoir la première adresse physique et la deuxième adresse physique envoyées par la NPU, et mettre en correspondance la première adresse physique et la deuxième adresse physique, respectivement, avec une première adresse virtuelle d'une première mémoire virtuelle sur l'APP cible et une deuxième adresse virtuelle d'une deuxième mémoire virtuelle sur l'APP cible ;
la CPU hôte est en outre configurée pour écrire dans la première mémoire virtuelle sur la base de la première adresse virtuelle en utilisant l'APP cible ;
la NPU est en outre configurée pour : lorsque la CPU hôte écrit dans la première mémoire virtuelle sur la base de la première adresse virtuelle à l'aide de l'APP cible, contrôler, à l'aide du contrôleur NPU, l'unité logique arithmétique pour exécuter le modèle AI ;
la NPU est en outre configurée pour écrire un résultat d'exécution du modèle AI dans le deuxième registre à l'aide du contrôleur NPU ; et
la CPU hôte est en outre configurée pour : effectuer une interrogation sur la deuxième mémoire virtuelle sur la base de la deuxième adresse virtuelle en utilisant l'APP cible, et lire le résultat d'exécution du modèle AI à partir du deuxième registre.

7. Procédé d'échange de données entre une CPU hôte et une NPU, le procédé étant appliqué à un dispositif informatique, le dispositif informatique comprenant une CPU hôte et une NPU, une application cible, APP, s'exécutant sur la CPU hôte, la CPU hôte comprenant un service AI (Service AI) et un pilote NPU, la NPU comprenant un contrôleur NPU, une unité logique arithmétique, et N registres, et N ≥ 1 ; le procédé comprenant les étapes suivantes :
charger, par la CPU hôte, un modèle AI correspondant à l'APP cible sur la NPU en utilisant le service AI et le pilote NPU ;
allouer, par la NPU, un premier registre au modèle AI en utilisant le contrôleur NPU, et envoyer une adresse physique du premier registre à la CPU hôte en utilisant le contrôleur NPU, où le premier registre appartient aux N registres ;
recevoir, par la CPU hôte, l'adresse physique envoyée par la NPU, et mettre en correspondance l'adresse physique à une première adresse virtuelle d'une première mémoire virtuelle sur l'APP cible ;
lorsque la CPU hôte écrit dans la première mémoire virtuelle sur la base de la première adresse virtuelle à l'aide de l'APP cible, déclencher le contrôleur NPU pour commander l'unité logique arithmétique pour exécuter le modèle AI, et écrire un résultat d'exécution du modèle AI dans le premier registre à l'aide du contrôleur NPU ; et
exécuter, par la CPU hôte, une interrogation sur la première mémoire virtuelle, sur la base de la première adresse virtuelle en utilisant l'APP cible, et lire le résultat d'exécution du modèle AI à partir du premier registre.

8. Procédé d'échange de données entre une CPU hôte et une NPU, le procédé étant appliqué à un dispositif informatique, le dispositif informatique comprenant une CPU hôte et une NPU, une application cible, APP, s'exécutant sur la CPU hôte, la CPU hôte comprenant un service AI (Service AI) et un pilote NPU, la NPU comprenant un contrôleur NPU, une unité logique arithmétique, et N registres, et N ≥ 2 ; le procédé comprenant les étapes suivantes :
charger, par la CPU hôte, un modèle AI correspondant à l'APP cible sur la NPU en utilisant le service AI et le pilote NPU ;
allouer, par la NPU, un premier registre et un deuxième registre au modèle AI en utilisant le contrôleur NPU, et envoyer une première adresse physique du premier registre et une deuxième adresse physique du deuxième registre à la CPU hôte en utilisant le contrôleur NPU, de sorte que la CPU hôte mette en correspondance la première adresse physique et la deuxième adresse physique, respectivement, avec une première adresse virtuelle d'une première mémoire virtuelle sur l'APP cible et une deuxième adresse virtuelle d'une deuxième mémoire virtuelle sur l'APP cible, où le premier registre appartient aux N registres ;
recevoir, par la CPU hôte, la première adresse physique et la deuxième adresse physique émises par la NPU, et mettre en correspondance la première adresse physique et la deuxième adresse physique, respectivement, avec la première adresse virtuelle de la première mémoire virtuelle sur l'APP cible et la deuxième adresse virtuelle de la deuxième mémoire virtuelle sur l'APP cible ;
lorsque la CPU hôte écrit dans la première mémoire virtuelle sur la base de la première adresse virtuelle à l'aide de l'APP cible, déclencher le contrôleur NPU pour commander l'unité logique arithmétique pour exécuter le modèle AI, et écrire un résultat d'exécution du modèle AI dans le deuxième registre à l'aide du contrôleur NPU ; et
exécuter, par la CPU hôte, une interrogation sur la deuxième mémoire virtuelle, sur la base de la deuxième adresse virtuelle en utilisant l'APP cible, et lire le résultat d'exécution du modèle AI à partir du deuxième registre.

9. Système à puce, le système à puce mettant en œuvre un dispositif informatique selon l'une quelconque des revendications 1 à 6, le système à puce étant configuré pour exécuter un programme informatique ou des instructions de sorte que le procédé selon l'une quelconque des revendications 7 ou 8 soit exécuté, avec N étant supérieur à 1 ou 2, respectivement.
